# EUROPÄISCHE PATENTSCHRIFT

(11) **EP 3 218 654 B1**
(45) Veröffentlichungstag und Bekanntmachung des Hinweises auf die Patenterteilung: **05.06.2019**
(21) Anmeldenummer: 15805113.6
(22) Anmeldetag: 10.11.2015
(51) Int. Cl.: F24H 4/04, F24D 11/02, F28D 20/00

(54) **VORRICHTUNG UND VERFAHREN ZUR ERZEUGUNG VON WAERMESTRÖMEN ZWISCHEN WÄRMEQUELLEN UND WÄRMESENKEN UNTER VERWENDUNG VON KREISPROZESSANLAGEN INNERHALB EINES SPEICHERBEHÄLTERS**
DEVICE AND METHOD FOR PRODUCING HEAT FLOWS BETWEEN HEAT SOURCES AND HEAT SINKS USING CIRCULAR PROCESS SYSTEMS WITHIN A STORAGE CONTAINER
DISPOSITIF ET PROCÉDÉ DE PRODUCTION DE FLUX THERMIQUES ENTRE DES SOURCES DE CHALEUR ET DES DISSIPATEURS THERMIQUES AU MOYEN DE SYSTÈMES EN CYCLE FERMÉ À L'INTÉRIEUR D'UN CONTENANT DE STOCKAGE

(30) Priorität: 13.11.2014 DE 102014116645; 10.06.2015 DE 202015103017 U
(43) Veröffentlichungstag der Anmeldung: 20.09.2017
(73) Patentinhaber: Hahn, Thomas, 61137 Schöneck (DE)
(72) Erfinder: Hahn, Thomas, 61137 Schöneck (DE)
(74) Vertreter: Habermann Intellectual Property Partnerschaft von Patentanwälten mbB
(86) Internationale Anmeldenummer: PCT/EP2015/076261
(87) Internationale Veröffentlichungsnummer: WO 2016/075170

(56) Entgegenhaltungen:
- WO-A2-2010/037431
- DE-A1- 2 604 942
- DE-A1- 2 741 507
- DE-A1-102012 112 347

## Beschreibung

Vorrichtung zur Erzeugung von Wärmeströmen zwischen Wärmequellen und Wärmesenken unter Verwendung von Kreisprozessanlagen innerhalb eines Speicherbehälters
Die Erfindung betrifft ein Behältermodul mit den Merkmalen des Oberbegriffs des Patentanspruchs 1. Die Erfindung betrifft auch einen Speicherbehälter mit mindestens zwei erfindungsgemäßen Behältermodulen, die in dem Speicherbehälter angeordnet sind.

### Begriffsdefinition:

Der Begriff "Kreisprozessanlage" bezeichnet hier alle Kältekreisprozesse, sowie andere thermische Kreisprozesse, bei denen eine Verdichtung des Arbeitsstoffes mittels mechanischer oder thermischer Verdichter erfolgt. Zu "Kreisprozessanlagen" gehören hier beispielsweise Kältekreisprozesse mit einem Kältemittel als Arbeitsstoff, wie Wärmepumpen, Kühlaggregate, Kaltwassersätze, Absorptionskreisprozesse und Diffusionsabsorptionskreisprozesse. Weiterhin auch Adsorptionskreisprozesse sowie rechtslaufende Kreisprozesse wie beispielsweise der Stirlingkreisprozess.

Der Begriff "Arbeitsstoff" bezeichnet hier alle Kältemittel verwendet in Kaltdampf Kreisprozessanlagen und darüber hinaus alle geeigneten Arbeitsstoffe, welche einen Phasenwechsel innerhalb von Kreisprozessanlagen durchlaufen können. "Arbeitsstoffe" sind nach dieser Definition auch das Arbeitsgas eines Stirlingkreisprozesses und das Kältemittel eines Adsorptionskreisprozesses.

Der Begriff "Wärmeträgermedium" umfasst hier ein Medium zur Übertragung und zur Speicherung von Wärme, wie beispielweise Wasser oder eine Mischung aus Wasser und Ethylenglykol. Dieses "Wärmeträgermedium" kann zwischen oder durch Wärmetauscher zur Wärmeübertragung umgewälzt werden. Weiterhin wird hier unter dem Begriff "Wärmeträgermedium" eine Mischung aus mehreren Stoffen erfasst. Beispielsweise kann das Wärmeträgermedium aus Wasser, Ethylenglykol und Anteilen von Essigsäure bestehen. Der Begriff "Wärmeträgermedium" umfasst hier gerade nicht den "Arbeitsstoff" oder das "Kältemittel" einer Kreisprozessanlage.

Der Begriff "sekundäres Wärmeträgermedium" umfasst hier ein Wärmeträgermedium, welches innerhalb und außerhalb des Speicherbehälters zirkuliert. Beispielsweise durch Wärmetauscher, welche innerhalb des Speicherbehälters eingebaut sind und hydraulisch mit den Wärmetauschern einer Wärmesenke oder einer Wärmequelle außerhalb des Speicherbehälters verbunden sind. Dieses Wärmeträgermedium, mit dem Wärme aus oder in den Speicherbehälter transportiert wird, ist nachfolgend als "sekundäres Wärmeträgermedium" bezeichnet.

Der Begriff "Wärmeenergienutzung" umfasst hier die Erzeugung von Wärme zur Nutzung und die Erzeugung von Nutzkälte. Nutzkälte ist physikalisch betrachtet Wärme auf niedrigem Temperaturniveau. "Wärmeenergienutzung" beschreibt hier die Umwandlung von Energie und deren Nutzung zu Heizzwecken und zu Kühlzwecken.

Der Begriff "Behältermodul" umfasst hier ein Behältermodul mit einem Behältermodulgehäuse innerhalb eines größeren Speicherbehälters. Das Behältermodulgehäuse weist vorzugsweise verschließbare Öffnungen auf und ist mit anderen Behältermodulen und einem Speicherbehälterbauteil, wie beispielsweise einem Speicherdeckel, verbindbar. Innerhalb des Behältermodulgehäuses sind vorzugsweise zwei oder mehr Wärmetauscher angeordnet.

Der Begriff "Strömungserzeugungseinrichtung" bezeichnet hier ein Gerät welches geeignet ist, ein Wärmeträgermedium zu beschleunigen, beispielsweise in Form einer Pumpe oder einer Umwälzpumpe für Fluide.

Der Begriff "Druckausgleichseinrichtung" bezeichnet hier kleine Öffnungen, Druckventile oder Überdruckventile in Gehäusen welche die Strömung eines Mediums zwischen zwei, weitgehend abgegrenzten Volumen zulassen und so ein Druckausgleich ermöglicht wird.

### Stand der Technik

Aus der Patentanmeldung WO 2010 037431 A2 sind Verfahren und Vorrichtungen bekannt, welche die Anordnung der Wärmetauscher und anderer Komponenten von Kreisprozessanlagen innerhalb eines Speicherbehälters beschreiben. Diese Vorrichtungen zeichnen sich dadurch aus, dass eine dynamische oder stufenweise Kopplung von mehreren Kreisprozessen über ein Wärmeträgermedium erfolgt. Dabei ist auch der unabhängige Betrieb einzelner Kreisprozessanlagen möglich. Weiterhin zeichnen sich diese Vorrichtungen beispielsweise dadurch aus, dass angeschlossene Solarthermiekollektoren bei ausreichendem Solarertrag auch ohne den Betrieb der eingebauten Kreisprozessanlagen zur Brauchwassererwärmung oder Heizung genutzt werden können. Die beschriebenen Vorrichtungen eignen sich insbesondere zur Intensivierung der Nutzung von Solarthermie für Wärme oder zur Erzeugung von Nutzkälte mit hohen Anteilen an freier Kühlung. Weiterhin zeichnen sich diese Vorrichtungen dadurch aus, dass bei der Kopplung von zwei Kreisprozessanlagen innerhalb des Speicherbehälters beinahe keine thermischen Verluste auftreten. Thermische Verluste bei der Übertragung, beispielsweise von einem Kondensator einer ersten Kreisprozessanlage zu einem Verdampfer einer zweiten Kreisprozessanlage, verbleiben nutzbar innerhalb des wärmegedämmten Speicherbehälters. Damit ist die fast vollständig verlustfreie Kopplung von mehreren Kältekreisprozessen möglich.

Aus der Patentschrift DE 10 2012 112347 B4 sind weiterhin Vorrichtungen bekannt, die vorteilhafterweise alle den Arbeitsstoff führende Komponenten der Kreisprozessanlagen innerhalb eines Speicherbehälters anordnen. Dabei ist das Wärmeträgermedium innerhalb des Speicherbehälters so gewählt, dass in einem möglichen Schadensfall aus den Kreisprozessanlagen austretender Arbeitsstoff nicht in die Umwelt gelangt, sondern im Speicherbehälter verbleibt und mit dem Wärmeträgermedium reagiert. Dabei kann der Arbeitsstoff absorbiert, umgewandelt, gebunden oder abgekühlt werden, oder auf andere Weise mit dem Wärmeträgermedium reagieren. Gleichzeitig bleibt austretender Arbeitsstoff zunächst innerhalb des Speicherbehälters. Durch die beschriebenen Verfahren und Vorrichtungen ist es möglich, Massenprodukte wie Wärmepumpen, Kaltwassersätze und Klimageräte mit klimaneutralen Kältemitteln, wie beispielsweise Ammoniak (R717), Ammoniak Dimethylether (R723), oder mit reinen Kohlenwasserstoffen wie Propan R290, Butan R600, Isobutan sicher zu betreiben.

Ein weiterer Vorteil dieser Vorrichtungen ist die, gegenüber vergleichbaren Anlagen, wesentlich vereinfachte hydraulische Einbindung in unterschiedliche Wärmequellen und Wärmesenken durch ein sekundäres Wärmeträgermedium. Die Anbindung von Wärmequellen und Wärmesenken erfolgt bei der Patentschrift DE 10 2012 112347 B4 über Sekundärkreisläufe, welche nicht mit dem Arbeitsstoff der Kreisprozessanlagen in Kontakt kommen. Die Wärmeübertragung im Speicherbehälter erfolgt indirekt über ein Wärmeträgermedium wie beispielsweise Wasser oder Wasser mit Ethylenglykol. Der eingesetzte Arbeitsstoff, beispielsweise Ammoniak, reagiert nach einem möglichen Austritt in einem Schadensfall mit dem umgebenden Wärmeträgermedium im Speicherbehälter. Damit ist sichergestellt, dass Arbeitsstoff nicht in das sekundäre Wärmeträgermedien, welches sowohl innerhalb als auch außerhalb des Speicherbehälters zirkuliert, gelangt. Auf diese Weise ist die einfache und sichere hydraulische Anbindung verschiedener Wärmequellen und Wärmesenken, sowie deren variable Nutzung im Betrieb möglich. In keinem Fall werden Wärmequellen oder Wärmesenken direkt von dem Arbeitsstoff durchströmt. Vorteilhaft ist weiterhin, dass Übertragungsverluste zwischen den Wärmetauschern innerhalb des wärmegedämmten Speicherbehälters als Wärme nutzbar verbleiben. Zudem ist Wärme und Nutzkälte ohne weitere hydraulische Vorrichtungen zeitgleich nutzbar. Die Nutzung der Kreisprozessanlagen kann in besonders vorteilhafter Weise durch deren zyklischen Betrieb erfolgen. Bei kleinem Temperaturhub der Kreisprozessanlagen wird jeweils das Puffervolumen des Wärmeträgermediums genutzt, um die Zieltemperaturen zu erreichen. Durch die Nutzung des Wärmeträgermediums innerhalb des Speichers als Kopplungsmedium ergibt sich ein thermischer Puffer. Dieser Puffer erlaubt es beispielsweise, bei einer Kälteanlage freie Kälte bis zur Grenze des Temperaturgefälles von der Wärmequelle zur Wärmesenke zu nutzen. Dabei wird durch den zeitweiligen, beziehungsweise zyklischen Einsatz der Kreisprozessanlagen immer ein kleines Temperaturgefälle von der Wärmesenke zur Wärmequelle erhalten. Zwar ist dabei der übliche Temperaturhub einer Kreisprozessanlage größer als die an der Wärmesenke oder Wärmequelle benötigte Temperaturdifferenz, aber durch die Pufferung ergibt sich ein allmählicher und damit geringerer Anstieg der Temperatur. Nach einer, durch die Kreisprozessanlage, vorgegebenen Mindestdauer für einen Betriebszyklus, kann die Kreisprozessanlage abgeschaltet werden ohne dass im Pufferspeicher die Endtemperatur erreicht wurde. Über die Betriebsdauer der Kreisprozessanlagen lassen sich gleitende Koppeltemperaturen zwischen zwei Kreisprozessanlagen erreichen.

Umgekehrt analog werden die Betriebszyklen bei Wärmepumpen mit den angeschlossenen Wärmequellen und Wärmesenken besonders effizient geschaltet. Dabei wird nur die gerade erforderliche Temperatur erzeugt, um ein ausreichendes Temperaturgefälle zwischen Wärmequelle und Wärmesenke zu erreichen. Als besonders vorteilhafte Ausgestaltung dieser Vorrichtungen wird ein Speicherbehälter mit einem Anteil Latentspeichermaterial (PCM Phase Change Material) im Wärmeträgermedium beschrieben. Durch den Vollzug von Phasenwechseln des PCM Materials vergrößert sich die Wärmekapazität der Speicherbehälter. Durch die thermische Trägheit infolge höherer Wärmekapazität ergeben sich positive Effekte auf den Betrieb integrierter Kreisprozessanlagen durch kontinuierliche und längere Betriebszyklen bei optimalen Betriebsbedingungen unter annähernd gleichen Temperaturbedingungen.

Beispielsweise in DE 27 41 507 A1 oder De 26 04 942 A1 sind auch für einen modularen Aufbau verwendbare Behälter mit einer Kreisprozessanlage zur Wärmeenergienutzung bekannt, welche die Merkmale eines Behältermoduls der eingangs genannten Gattung aufweisen. Diese Behälter sind jedoch nicht ohne weiteres dafür geeignet, modulartig miteinander kombiniert und miteinander verbunden zu werden, um komplexe Kreisprozesse innerhalb eines die mehreren Behälter umgebenden Speicherbehälters realisieren und durchführen zu können.

### Aufgabe:

Aufgabe der Erfindung ist es, die beschriebenen Vorrichtungen einfacher und kostengünstiger und in der Leistung skalierbar umzusetzen. Aufgrund des breiten Einsatzspektrums ergibt sich eine große Anzahl unterschiedlicher Varianten von Wärmepumpen und Kälteanlagen. Vorteilhaft wäre es, wenn entsprechende Anlagen betriebsfertig als kompakte Einheit ausgeliefert werden könnten, welche am Einsatzort nur noch mit einem Wärmeträger befüllt, hydraulisch angeschlossen und mit einer Stromquelle verbunden werden müssten. Vorteilhaft wäre die Verwendung von weitgehend gleichen Geräten zur Erzeugung von Nutzkälte und zur Wärmegewinnung.

### Beschreibung:

Behältermodul für einen Speicherbehälter mit mindestens einer Kreisprozessanlage zur Wärmeenergienutzung nach Anspruch 1.

Behältermodule der beschriebenen Art sind eine kostengünstige Lösung um mit gleichen oder ähnlichen Standardbauteilen, durch die Variation der Zusammenstellung unterschiedlichste Varianten von Geräten als Wärmepumpe und Kälteanlage zu realisieren. Behältermodule schaffen die Vorrausetzung um mit gleichen oder ähnlichen Wärmetauschern und gleichen oder ähnlichen Leitungsanschlüssen für eine flexible und rationelle Serienfertigung unterschiedlichster Geräte.

Erfindungsgemäß haben die Behältermodulgehäuse eine Vorrichtung zur Verbindung mit einer Haltevorrichtung welche zwei oder mehr Behältermodule innerhalb eines Speicherbehälters aufnehmen kann.

In vorteilhafterweise sind Behältermodule kombinierbar mit einem Speicherbehälter mit mindestens einer Kreisprozessanlage zur Wärmeenergienutzung, wobei der Speicherbehälter ein Speicherbehältergehäuse mit einer Gehäuseöffnung und einen, lösbar mit dem Speicherbehältergehäuse verbindbaren und die Gehäuseöffnung verschließenden Gehäusedeckel aufweist und wobei in dem Speicherbehältergehäuse mindestens zwei Behältermodule angeordnet sind und einzelne Wärmetauscher aus zwei unterschiedlichen Behältermodulen mit Hilfe von Fluidleitungen so mit Kreisprozessanlagenkomponenten verbunden sind, dass mindestens eine Kreisprozessanlage betrieben werden kann, wobei in mindestens einer Kreisprozessanlage ein geschlossener Kreisprozess mit einem Arbeitsstoff betrieben werden kann, welcher isoliert von dem Wärmeträgermedium in den Innenräumen der Behältermodule und isoliert von dem Wärmeträgermedium in dem die Behältermodule umgebenden Innenraum des Speicherbehälters verwendet werden kann, wobei Wärmeströme aus Wärmequellen in einzelne Behältermodule über weitere dort angeordnete Wärmetauscher hinein, und aus Behältermodulen heraus in Wärmesenken übertragen werden können, wobei sowohl externe Wärmesenken und Wärmequellen als auch interne Wärmetauscher welche jeweils Wärmesenke oder Wärmequelle einer Kreisprozessanlage sind, genutzt werden können, abhängig von der Paarung der Wärmetauscher in den einzelnen Behältermodulgehäusen, kann die Funktion einer seriellen Kreisprozesskaskadenschaltung, einer Parallelschaltung von mindesten zwei unterschiedlichen Kreisprozessanlagen, und die Kombination aus serieller und paralleler Zusammenschaltung unterschiedlicher Kreisprozessanlagen erreicht werden kann.

Ein Speicherbehälter mit ein oder zwei integrierten Kreisprozessanlagen kann über die eingebauten Behältermodule ganz unterschiedliche aus Standardkomponenten konfiguriert werden, indem die Anordnung und Verbindung der Wärmetauscher variiert wird.

Erfindungsgemäß sind innerhalb des Speicherbehälters angeordnete, und über Wärmetauscher innerhalb einzelner Behältermodule thermisch gekoppelte Kreisprozessanlagen, mittels einer Steuerungseinrichtung über Schaltventile wahlweise in paralleler, serieller oder einer Kombination dieser Betriebsarten zu betreiben.

Vorteilhafterweise ist an einem Speichergehäusebauteil, vorzugsweise dem Speichergehäusedeckel des Speicherbehälters eine Modulverbindungseinrichtung zum Festlegen eines Behältermoduls angeordnet.

Die Anordnung erlaubt die Montage eines kompletten Stapels von Behältermodulen zusammen mit einer betriebsfertig montierten Kreisprozessanlage in ein Speicherbehältergehäuse.

Erfindungsgemäß weist der Gehäusedeckel des Speicherbehälters mehrere Anschlussleitungsstutzen angeordnet sind, mittels derer aus den Behältermodulen herausgeführte Anschlussleitungen mit einer externen Wärmequelle oder mit einer externen Wärmesenke verbindbar sind.

Der Vorteil eines sekundären Wärmeträgermediums in allen Leitungen nach außen erlaubt den Anschluss eines Gerätes durch die einfache Verbindung der hydraulischen Anschlüsse und der Stromversorgung, ohne das kältetechnisches Fachpersonal notwendig ist.

Erfindungsgemäß ist jeder Innenraum der Behältermodule mit einem ersten Wärmespeichermedium und der Innenraum des Speicherbehälters mit einem zweiten Wärmespeichermedium befüllt.

Erfindungsgemäß ist in den Kreislauf eines Wärmeträgermediums zwischen zugeordneten Wärmetauschern durch eine, im Kreislauf hydraulisch eingebundene, Strömungserzeugungseinrichtung angeordnet.

Erfindungsgemäß erfasst der Kreislauf des Wärmeträgermediums die zugeordneten Wärmetauscher und das innerhalb des Behältermoduls befindliche Wärmeträgermedium, wobei durch mindestens ein offenes Ende des hydraulischen Kreislaufs das Wärmeträgermedium innerhalb des Behältermoduls mit in den Kreislauf einbezogen und umgewälzt wird.

Durch die Einbeziehung des Wärmeträgermediums in den Umlauf zur konvektiven Wärmeübertragung ergibt sich eine sinnvolle zusätzliche Wärmespeicherkapazität dem positiven Effekt gleichmäßigerer Betriebsbedingungen über die Betriebsintervalle der Kreisprozessanlagen.

Erfindungsgemäß ist es für Anwendungen, bei denen Latentspeichermaterial innerhalb des Speicherbehälters oder auch innerhalb der Behältermodule als Wärmeträgermedium oder als Anteil des Wärmeträgermediums verwandt werden, vorgesehen, dass das der Kreislauf des Wärmeträgermediums in einem geschlossenen hydraulischen Kreislauf zwischen den Wärmetauschern erfolgt.

Erfindungsgemäß ist vorgesehen, dass die innerhalb des Speicherbehältergehäuses angeordneten Behältermodule ein Behältermodulgehäuse, einen Gehäuseboden und eine Gehäusewand aufweisen, wobei an dem Gehäuseboden und an einem dem Gehäuseboden gegenüberliegenden Rand der Gehäusewand ein radial angeordneter Verbindungsreinrichtung ausgebildet ist.

Weiterhin ist erfindungsgemäß vorgesehen, dass innerhalb des Speicherbehälters mindestens ein Behältermodulgehäuse mit einem Wärmeträgermedium angeordnet ist.

Die Anordnung eines Behältermodulgehäuses ohne eingebaute Wärmeträger dient benachbarten Behältermodulen als Abstützung oder als Abstandshalter zur besseren thermischen Trennung der daran befestigten Behältermodule. Ein solches Behältermodulgehäuse kann auch Latentspeichermaterial aufnehmen und so die Wärmekapazität des Speicherbehälters erhöhen.

Erfindungsgemäß sind zwei oder mehrere Behältermodule in einer Montageeinheit vorzugsweise an einem Speicherbehälterdeckel festgelegt.

In vorteilhafter Weise werden innerhalb eines Speicherbehälters angeordnete Kreisprozessanlagen in Abhängigkeit unterschiedlicher Messgrößen so gesteuert, dass in Abhängigkeit der über Temperatursensoren gemessenen Temperaturen der Wärmequellen und Wärmesenken, die Betriebsintensität und der Betrieb, der jeweiligen Strömungserzeugungseinrichtung und damit die Geschwindigkeit der Wärmeübertragung zwischen dem Wärmträgermedium innerhalb der Behältermodule und der Wärmetauscher durch eine Steuerungseinrichtung, gesteuert wird, und an die Wärmeströme der Kreisprozessanlage in der Weise gesteuert werden, dass die optimalen Betriebsparameter der Steuerungseinrichtung angestrebt werden.

Weiterhin kann die Geschwindigkeit des Wärmetransports zwischen Kreisprozessanlagen und Wärmesenken und Wärmequellen aufeinander abgestimmt werden, um damit die Betriebsbedingungen der Kreisprozessanlagen zu optimieren in der Weise, dass Abhängig von einer seriellen oder parallelen Kopplung die Wärmetauscher, welche jeweils Wärmesenke oder Wärmequelle einer Kreisprozessanlage sind, in einem koppelnden Behältermodul angeordnet sind, wobei in Abhängigkeit der vom Speicherbehälter zu leistenden Wärmeströme zwischen externen Wärmequellen und Wärmesenken der Betrieb und die Betriebsintensität, der in diesem Behältermodul hydraulisch wirkenden Strömungserzeugungseinrichtung durch eine Steuerungseinrichtung, geregelt wird, wobei die Parameter der Ansteuerung von der Steuerungseinrichtung in Anhängigkeit von gemessenen Wärmeströmen und deren Temperaturen und den Betriebskennfeldern der Steuerungseinrichtung als Betriebssignale an die Strömungserzeugungseinrichtungen über Signalleitungen geleitet werden.

Erfindungsgemäße Anlagen lassen eine Kombination und Auswahl der zum jeweiligen Zeitpunkt optimal passenden externen Wärmequellen und Wärmesenken zu, wobei durch eine Steuerungseinrichtung einzelne Wärmequellen und Wärmesenken selektiv über Wärmetauscher innerhalb eines Behältermoduls mit in den Wärmeaustausch durch das strömende Wärmeträgermedium einbezogen oder ausgekoppelt werden können, wobei ein oder mehrere Schaltventile im hydraulischen Kreislauf durch die Steuerungseinrichtung über Steuerungsleitungen so geschaltet werden, dass einzelne Wärmetauscher in den Kreislauf des Wärmträgermediums ganz oder teilweise einbezogen oder ausgekoppelt sind.

Erfindungsgemäß ist die parallele oder sequentielle Verwendung verschiedener Wärmesenken und Wärmequellen über die Ansteuerung von externen Pumpen welche das externe Wärmeträgermedium befördern möglich wobei, einzelnen Wärmetauscher in den Behältermodulen, welche hydraulisch mit Wärmequellen und Wärmesenken verbindbar sind, in den Wärmestrom des Speicherbehälters eingegliedert oder ausgegliedert werden können, wobei durch eine Steuerungseinrichtung die Strömung des jeweiligen Wärmeträgermediums in dem nach außen, außerhalb des Behältermoduls, reichenden Wärmetauscherkanal selektiv in Betrieb genommen, deaktiviert, oder in der Strömungsgeschwindigkeit verändert wird, wobei dazu die Ansteuerung der zuständigen Umwälzpumpen, nach Vorgaben der im Steuergerät abgelegten Betriebsparameter durch Steuerimpulse der Steuerungseinrichtung an die jeweiligen Umwälzpumpen erfolgt, wobei durch die Steuerungseinrichtung dabei variable Messgrößen wie Wärmeströme und Temperaturen an den Wärmequellen und an den Wärmesenken sowie Strömungsparameter in deren hydraulischen Verbindungen zur Berechnung der Steuerparameter mit einbezogen werden.

Erfindungsgemäß kann die Wärmespeicherkapazität des Speicherbehälters unterschiedlich intensiv genutzt werden, wobei im Hinblick auf die vom Gesamtsystem zu leistenden Wärmeströme und die Kapazität der externen Wärmequellen und Wärmesenken die Temperatur des im Speicher befindlichen Wärmeträgermediums auf die innerhalb des Speicherbehälters betriebenen Kreisprozessanlagen in der Weise abgestimmt wird, dass die Steuerungseinrichtung Temperaturmesswerte des Wärmeträgermediums über Temperatursensoren in unterschiedlichen vertikalen Positionen erfasst und die errechnete Wärmekapazität des Wärmeträgermediums als Wärmepuffer bei dem Betrieb der Kreisprozessanlagen als Regelgröße einbezieht, wobei außerhalb der Behältermodule verlaufende Fluidleitungen und Wärmetauscher Wärme austauschen und wobei der selektive Betrieb einzelner Kreisprozessanlagen eine Erhöhung oder eine Absenkung der gespeicherten Wärmeenergie im Speicherbehälter bewirkt.

Gleichartige Behältermodule haben hier unterschiedlichste Funktionen innerhalb der Gesamtfunktion der Wärmepumpe oder Kälteanlage einnehmen. Die Montage der einzelnen Behältermodule zu einem vertikal orientierten Stapel erzeugt ein nutzbares Restvolumen außerhalb dieses Stapels, welches für erweiterte Funktionen zusammen mit den Kreisprozessanlagen genutzt werden kann. Beispielsweise kann das Volumen innerhalb des Speicherbehälters, jedoch außerhalb der Behältermodule als Wärmepuffer oder erweiterter Wärmepuffer mit einem Latentspeichermaterial genutzt werden. Die Behältermodule sind multifunktional. Sie sind unter anderem: Halterung, Wärmepuffer, Weiche für Wärmeströme und Wärmekoppelbehälter. Sie erfüllen die Funktion einer Haltevorrichtung für Wärmetauscher und Komponenten der Kreisprozessanlagen. Weiterhin sind die Behältermodule so gestaltet, dass sie in vertikaler Weise innerhalb eines Speicherbehälters stapelbar und verbindbar ausgeführt sind. Erfindungsgemäß bilden in dieser Weise vertikal angeordnete Behältermodule einen für Strömungen des Wärmeträgermediums abgegrenzten Raum. In den unterschiedlichen Behältermodulen können voneinander unabhängige Strömungen des Wärmeträgermediums stattfinden, auch Strömungen im Restvolumen des Speicherbehälters bleiben davon weitgehend unberührt.

Erfindungsgemäß erfüllen die Behältermodule mit ihrem jeweiligen Wärmeträgermedium, die Funktion einer variablen Kopplungseinrichtung zwischen unterschiedlichen Wärmequellen und Wärmesenken. Durch die Umwälzung des Wärmeträgermediums innerhalb der Behältermodule und zwischen oder in den Wärmetauscher erfolgt die Wärmeübertragung zwischen den gerade im Kreislauf geschalteten Wärmetauschern. Üblicherweise sind derartige Wärmetauscher nicht innerhalb eines Wärmeträgermediums oder Wärmespeichermediums verbaut. Eine typische Bauart dieser Wärmetauscher sind Plattenwärmetauscher oder Rohrbündelwärmetauscher. Diese Wärmetauscher werden üblicherweise außen wärmegedämmt um Wärmeübertragungsverluste zu vermindern. Der erfindungsgemäße Einbau innerhalb eines Behältermoduls erfordert jedoch keine Wärmedämmung. Plattenwärmetauscher weisen besonders große Wärmetauscheroberflächen bei kompakten Abmessungen auf. Vorteilhafterweise zwingt die Oberflächenstruktur der einzelnen Platten das Wärmeträgermedium zu einer turbulenten Strömung. Durch mindestens zwei Kammervolumen strömen die Wärmeträgermedien im Gegenstrom-, Kreuzgegenstrom- oder Gleichstromprinzip hindurch.

Übertragungsverluste verbleiben zunächst innerhalb des Behältermoduls. Die einzelnen Behältermodule übernehmen erfindungsgemäß auch die Funktion einer Wärmeübertragungsweiche, welche zudem in ihrer Wärmeübertragungsintensität steuerbar sind. Abhängig von der Strömungsgeschwindigkeit des darin umgewälzten Wärmeträgermediums und der einbezogenen Wärmetauscher wird die Wärme verteilt. Erfindungsgemäß ist es für bestimmte Anforderungen vorgesehen, dass innerhalb eines Behältermoduls durch zwischengeschaltete Schaltventile unterschiedliche Wärmetauscher in den jeweiligen Umwälzkreislauf des Wärmeträgermediums einbezogen werden, oder durch Zwischenstellungen der Ventile mit einem Teilstrom einbezogen werden.

Erfindungsgemäß sind auch Ventile zwischen den Behältermodulgehäusen vorgesehen. Über diese Ventile erfolgt ein Druckausgleich zwischen den Behältermodulen. Druckunterschiede entstehen beispielsweise durch unterschiedliche Temperaturen des Wärmeträgermediums in benachbarten Behältermodulen. Auch aufsteigende Strömungen infolge größerer vertikaler Temperaturunterschiede im Speicherbehälter können durch Ventile ermöglicht werden.

Überraschenderweise offenbart der erfindungsgemäße Aufbau keine wesentlichen Unterschiede zwischen einer Wärmepumpe und einer Kältemaschine. Herkömmliche Wärmepumpen unterscheiden sich beispielsweise deutlich von Kaltwassersätzen.

Die erfindungsgemäße Montage der kältetechnischen Komponenten gestaltet sich überraschend einfach. Die Erfindung ermöglicht schon vor einer Montage in dem Speicherbehälter die testweise Inbetriebnahme der Kreisprozessanlagen außerhalb des Speicherbehälters. Die Kreisprozessanlagen können betriebsfertig vormontiert werden und später im Verbund mit den vertikal zusammengestellten Behältermodulen und darin befindlichen Wärmetauschern in einen Speicherbehälter montiert werden.

Der erfindungsgemäße Aufbau ermöglicht den Einsatz von standardisierten und vorgefertigten Leitungen für die hydraulischen Verbindungen der Wärmetauscher und der Arbeitsstoffkreisläufe.

Überraschend kompakt können erfindungsgemäße Anlagen dimensioniert werden. Der erfindungsgemäße Aufbau hat damit den Vorteil, dass die den Arbeitsstoff führenden Leitungen der Kreisprozessanlagen ungewöhnlich kurz ausgeführt werden können. Das hat zur Folge, dass die Gasgeschwindigkeiten des Arbeitsstoffes verhältnismäßig klein bleiben und der Schmierstofftransport mit dem Gas verbessert wird. Dadurch ist ein geringerer Schmierstoffanteil im Arbeitsstoff notwendig. Durch einen kleineren Anteil von Schmiermittel, beispielsweise Kälteöl, in der Kreisprozessanlage ergibt sich ein weiterer Effizienzvorteil.

Nur die erfindungsgemäße, äußerst kompakte Bauweise ermöglicht den Einsatz preisgünstiger Verdichter kleiner Leistung für den Betrieb mit Ammoniak. Ammoniak ist ein besonders effizienter Arbeitsstoff. Häufig verwendete Verdichter für Ammoniak sind für größere Leistungen, beispielsweise bei gewerblicher Kühlung, ausgelegt. Diese Kompressoren haben einen aufwändigen und komplizierten Ölkreislauf, beispielsweise mit Ölsammelbehältern und zusätzlichen Ölpumpen zur Ölrückführung. Die erfindungsgemäße äußerst kompakte Bauweise ermöglicht hier den Einsatz kostengünstiger Kompressoren kleiner Leistung ohne besondere Aufwendungen für den Schmiermittelkreislauf. Der kurze Kreislauf des Arbeitsstoffes erlaubt die Beförderung von Schmiermittel mit dem Kältemitteldampf. Dieser erfindungsgemäße Vorteil trifft auch bei der Verwendung von Kohlenwasserstoffen als Arbeitsstoff wie Propan oder Isobutan zu. Diese Arbeitsstoffe ermöglichen generell einen gegenüber Ammoniak besseren Schmiermitteltransport. Für diese Arbeitsstoffe kann der Schmiermittelanteil deshalb noch weiter reduziert werden.

Der erfindungsgemäße Aufbau eignet sich ganz besonders für Kreisprozessanlagen, welche mit dem Arbeitsstoffgemisch Ammoniak Dimethylether betrieben werden. Der Vorteil von kompakten Plattenwärmetauschern mit geringem Strömungswiederstand ist hier kombiniert mit vorteilhaft kurzen Druckgasleitungen und damit vergleichsweise geringen Heißgasgeschwindigkeiten.

Die Erfindung zeichnet sich durch einen überraschend einfachen Aufbau unter Verwendung von Standardbauteilen der Kältetechnik aus. Der modulartige Aufbau ermöglicht die Konfiguration unterschiedlichster Kreisprozessanlagen mit immer gleichen Komponenten und Bauteilen. Erfindungsgemäß lassen sich Standardausführungen modular erweitern. Beispielsweise können zusätzlich Wärmetauscher für weitere Wärmequellen und Wärmesenken eingebaut werden. Für das große Spektrum von Anwendungen zur Wärme und Nutzkälteerzeugung lässt sich so der Preisvorteil der Fertigung großer Stückzahlen nutzen. Erst die Spezifikation der Geräte, herbeigeführt durch die Komponentenauswahl und spezifische Steuerungsprogramme, macht aus einem Standardprodukt eine anwendungsspezifische Sonderlösung. Die Erfindung vereint die fertigungstechnischen Vorteile einer Großserienfertigung bei kleineren Stückzahlen für anwendungsbezogenen Anforderungen. Die Vorteile der Fertigung unterschiedlichster Geräte mit Gleichteilen sind der geringere Herstellungspreis und die schnellere Montage.

Die Erfindung ermöglicht zudem eine Skalierung der Leistung. Beispielsweise können in Geräten mit kleiner Leistung Behältermodule verbaut werden, welche nur die Funktion eines Platzhalters zwischen weiteren Behältermodulen einnehmen. Innerhalb eines äußerlich gleichen Speicherbehälters kann auf diese Weise ein Gerät mit nur einer Kreisprozessanlage oder auch ein Gerät mit zwei Kreisprozessanlagen eingebaut werden. Erfindungsgemäß ist es auch möglich, unterschiedliche Größen von Speicherbehältern zu verwenden, welche jedoch mit gleich großen Behältermodulen in variabler Anzahl ausgestattet sind.

Die Erfindung hat in dem Kälte- und Wärmepumpenmarkt den weiteren Vorteil, dass die langjährige Ersatzteilversorgung und die Wartung der Geräte aufgrund geringerer Lagerhaltungskosten durch geringere Variantenzahl wesentlich preisgünstiger erreicht werden kann.

Die Erfindung beinhaltet Behältermodule innerhalb eines Speicherbehälters. Dabei verfügt der Speicherbehälter über einen Deckel oder eine andere verschließbare und lösbare Speicheröffnung. Besonders vorteilhaft in Bezug auf das Gesamtvolumen sind rechteckige Speicherbehälter für den Fall, dass diese durch Türöffnungen transportiert und innerhalb von Gebäuden verwandt werden sollen. Innerhalb des Speicherbehälters sind die Behältermodule vertikal gestaffelt und vorteilhafterweise miteinander und mit dem Speicherdeckel verbindbar. Vorzugsweise werden Wärmetauscher in den einzelnen Modulbehältern vormontiert und dann in einem Stapel, bestehend aus mehreren Behältermodulen, mit dem Speicherdeckel verbunden, beispielsweise verschraubt. Dabei muss nicht zwingend jedes Behältermodul auch Wärmetauscher enthalten. Leere Behältermodule also Behältermodulgehäuse, ohne Wärmetauscher, können beispielsweise dazu dienen, weitere damit verbundene Behältermodule in einem vertikalen Abstand zu halten. In einer besonders effizienten Ausführung der Erfindung kann beispielsweise innerhalb eines Behältermoduls, welches keine Wärmetauscher beinhaltet, zusätzlich oder anstelle eines Wärmeträgermediums auch ein "Phase Change Material" wie Paraffin eingefüllt werden. Durch diese Maßnahme wird die Wärmespeicherkapazität erhöht. Erfindungsgemäß können Behältermodule in einem vertikalen Stapel verbaut und zunächst ohne Wärmeträgermedium in einen Speicherbehälter eingebaut werden. Erfindungsgemäß können der Speicherbehälter, wie auch die darin eingebauten Behältermodule, von außen mit einem Wärmeträgermedium befüllt werden. Die Befüllung am Einsatzort erleichtert den Transport. Dazu sind erfindungsgemäß verschließbare Belüftungsstutzen und Leitungen zum Einfüllen und Absaugen oder Ablassen des Wärmeträgermediums vorgesehen.

Erfindungsgemäß sind die einzelnen Behältermodule gegenüber benachbarten Behältermodulen vorzugsweise mit Druckausgleichsventilen ausgestattet. Durch diese Ventile wird ein Druckausgleich, beispielsweise hervorgerufen durch unterschiedliche Temperaturen des Wärmeträgermediums, ermöglicht. Auch das gemeinsame Befüllen aller Behältermodule mit dem Wärmeträgermedium, über nur eine Leitung, wird durch Ventile zwischen benachbarten Behältermodulen erreicht. Erfindungsgemäß ist vorgesehen, dass vor einer ersten Inbetriebnahme die Behältermodule gleichzeitig mit dem verbleibenden Speicherbehältervolumen mit dem jeweiligen Wärmeträgermedium befüllt werden. Dadurch werden Druckanstiege und Belastungen der Behältermodulgehäuse vermieden. Zusätzlich ist erfindungsgemäß vorgehsehen, dass vorzugsweise auch Druckventile in den Gehäusen der Behältermodule eingebaut sind und damit eine nicht überschreitbare maximale Druckdifferenz zwischen den einzelnen Modulbehältern und dem diese umgebenden Speicherbehälter erreicht wird. Im Falle eines Schadens innerhalb von eingebauten Wärmetauschern kann ein entstehender Druckanstieg durch ausströmenden Arbeitsstoff über druckausgleichenden Ventile, nach außen in den Speicherbehälter verteilt werden. Diese Druckventile sind erfindungsgemäß besonders für den Einsatz von reinen Kohlenwasserstoffen wie beispielsweise Propan oder Isobutan vorteilhaft.

Erfindungsgemäß ist auch vorgesehen Druckausgleichsventile durch kleine Öffnungen, beispielsweise Bohrungen, in den Behältergehäusen zur ersetzen. Erfindungsgemäß sind diese Bohrungen so ausgeführt, dass sie einen Druckausgleich und eine geringe Strömung des Wärmeträgermediums zwischen den Behältermodulen untereinander und zwischen den Behältermodulen und dem Speicherbehälter erlauben. Gleichzeitig bleibt die durch Strömungserzeugungseinrichtungen innerhalb der Behältermodule erzwungene Strömung des Wärmeträgermediums davon verhältnismäßig unberührt, sodass es nur zu geringen Enthalpieverlusten infolge von vertikaler Wärmeverschleppungen durch das Wärmeträgermedium innerhalb des Speicherbehälters kommt.

Erfindungsgemäß ist für Kreisprozessanlagen, welche für Kohlenwasserstoffe als Arbeitsstoff vorgesehen sind, ein Überdruckventil im Speicherbehälter nach außen vorgesehen. Dabei ist das Überdruckventil mit einer Leitung verbindbar, welche Gase oder Flüssigkeiten in einem Schadensfall nach außen, außerhalb von Gebäuden oder Maschinenräumen, leitet.

Erfindungsgemäß standardisierte Speicherbehälter und Behältermodule werden als Grundkomponenten für die Verwendung unterschiedlicher Arbeitsstoffe modifiziert. Dazu ist vorgesehen, dass beispielsweise Druckausgleichsventile oder Wärmetauscher wahlweise eingebaut werden können. Dazu ist erfindungsgemäß vorgesehen, dass Behältermodule mit vorgestanzten Leitungsdurchführungsöffnungen versehen sind, welche im Bedarfsfall während der Montage vollständig herausgebrochen und beispielsweise für die Durchführung eines Wärmetauscheranschlusses verwendet werden können.

Erfindungsgemäß sind die Behältermodule vorzugsweise in der Form von oben offenen, rechteckigen, quadratischen oder runden Behältern gestaltet. Die oben offene Form stellt eine einfache Ausführung einer Montageöffnung dar. Jede weitere Form ist erfindungsgemäß denkbar. Durch die offene Form lassen sich Wärmetauscher einfach innerhalb der Behältermodule montieren und beispielsweise mit den Wandungsdurchführungen der Behältermodulgehäuse verbinden. Das Zusammenfügen unterschiedlicher Behältermodule führt dabei zu dem Verschließen der zunächst offenen Behältermodule. Beispielsweise werden oben offene rechteckige Behältermodule jeweils durch die Böden der darüber montierten Behältermodule verschlossen.

Erfindungsgemäß sind die Wärmetauscher vorzugsweise mit einem Anschlussflansch oder einer Verschraubung ausgestattet, welche es ermöglicht die Wärmetauscher aus dem Behältermodulgehäuse heraus mit einer außerhalb liegenden Leitung zu einer Wärmequelle, zu einer Wärmesenke oder mit einer Kreisprozessanlage hydraulisch zu verbinden. Vorzugsweise erreicht dabei die vorgesehene Verschraubung gleichzeitig eine Fixierung der Wärmetauscher mit dem Gehäuse der Behältermodule.

Erfindungsgemäß müssen die einzelnen Behältermodule vorzugsweise nicht wärmegedämmt sein. Wärme aus dem Wärmeträgermedium innerhalb der Behältermodule kann durch Wärmestrahlung, durch Wärmeleitung und durch Konvektion an das Wärmeträgermedium im Speicherbehälter außerhalb der Behältermodule abgegeben werden. Erfindungsgemäß ist eine wichtige Funktion der Behältermodule darin begründet, dass die Wärmeübertragung zwischen den innerhalb der Behältermodule befindlichen Wärmetauschern durch erzwungene Konvektion weitgehend ungestört von anderen Wärmeaustauschvorgängen innerhalb des Speicherbehälters vorgenommen werden kann. Erfindungsgemäß wird dazu vorzugsweise innerhalb des jeweiligen Behältermoduls eine steuerbare Konvektion erzwungen. Dazu wird das dort befindliche Wärmeträgermedium mittels einer Strömungserzeugungseinrichtung umgewälzt.

In vorteilhafter Weise wird dabei das Wärmeträgermedium vorzugsweise in einem offenen Kreislauf umgewälzt. Dabei enden die hydraulischen Kreislauf-Leitungen mit ihren Öffnungen, den Leitungsenden, innerhalb des Behältermoduls.

Das Wärmeträgermedium innerhalb des Behältermoduls ist auch ein Wärmespeicher, welcher annähernd die mittlere Wärmeübertragungstemperatur der beteiligten Wärmetauscher annimmt. Der Wärmeaustausch zwischen den einzelnen Wärmetauschern erfolgt vorwiegend über Konvektion mittels des Wärmeträgermediums. Erfindungsgemäß können auf diese Weise zwei oder mehrere Wärmetauscher innerhalb des Behältermoduls untereinander Wärme austauschen.

Es ist ebenfalls möglich, die Umwälzung des Wärmeträgermediums durch einen geschlossenen Kreislauf zwischen den einzelnen Wärmetauschern auszuführen. Diese Ausführung kann beispielsweise genutzt werden, um Wärme über die Leitungswandungen der hydraulischen Verbindungsleitungen, sowie über die Außengehäuse der Wärmetauscher, abzugeben oder aufzunehmen. Auf diese Weise kann beispielsweise Latentspeichermaterial innerhalb eines Behältermoduls erwärmt oder abgekühlt werden.

Erfindungsgemäß können hydraulische Verbindungsleitungen zwischen den Wärmetauschern auch teilweise außerhalb der Behältermodule im Speicherbehälter verlegt werden. Verbindungsleitungen außerhalb der Behältermodule dienen als einfache Wärmetauscher und können beispielsweise Kompressoren kühlen oder Wärme zu einem im Speicherbehälter befindlichen Latentspeichermaterial übertragen. Geeignete Latentspeichermaterialien sind beispielsweise Paraffine oder Salzhydrate.

In einer weiteren erfindungsgemäßen Variante können die Behältermodulgehäuse so gestaltet werden, dass eine besonders gute Wärmeleitung, Wärme besonders gut an das außerhalb der Behältermodule befindliche Wärmeträgermedium abgeben wird. Beispielsweise kann die Oberfläche durch Wärmeleitbleche oder andere Vorrichtungen vergrößert werden um eine bessere Wärmeübertragung zu erreichen. Ziel einer besseren Wärmeübertragung ist beispielsweise die Nutzung des Wärmeträgermediums zur Phasenumwandlung und damit zur Vergrößerung der Wärmespeicherkapazität des Speicherbehälters.

Weitere Vorteile der Erfindung ergeben sich durch die einfache Anpassung der Wärme- oder Kälteerzeugungsanlagen an unterschiedlichsten Wärmequellen und Wärmesenken. Die Anbindung erfolgt über ein sekundäres Wärmeträgermedium unterschiedlichste externe Wärmetauscher können parallel oder sequentiell genutzt werden. Ein Vorteil der Erfindung ergibt sich durch die vertikale Staffelung der Temperaturen der Behältermodule. Durch die Behältermodule werden innerhalb des Speicherbehälters verschiedene vertikal gestaffelte Temperaturzonen zur Nutzung bereitgestellt. Vorzugsweise werden Wärmequellen mit niedriger Temperatur mit einem Wärmetauscher in einem vertikal unten angeordneten Behältermodul verbunden.

Erfindungsgemäß ist weiterhin vorgesehen, dass mittels schaltbarer Ventile innerhalb der Wärmeträgermedium-Kreisläufe einzelne Wärmetauscher aus dem Kreislauf ausgekoppelt oder eingekoppelt werden können.

Die Verwendung von einem Wärmeträgermedium als Wärmepuffer und gleichzeitig als Wärmeübertragungsmedium bringt weitere Effizienzvorteile. Erfindungsgemäß aufgebaute Geräte können über längere Betriebszyklen in einem effizienten Betriebsbereich betrieben werden. Der Wärmepuffer des Wärmeträgermediums in einem Behältermodul erlaubt die kontinuierliche Wärmeabgabe über Kondensatoren und die Wärmeaufnahme der Verdampfer über längere Perioden bei relativ konstanten Temperaturen. Verdichter und weitere Komponenten der Kreisprozessanlagen können besser für einen vorgegebenen Betriebsbereich ausgelegt und angesteuert werden.

Grundsätzlich gibt es viele Parameter die Einfluss auf die Effizienz einer Kreisprozessanlage haben. Wesentlichen Einfluss hat die Wahl des Arbeitsstoffes und noch entscheidender ist jedoch der Temperaturhub bei allen Kreisprozessanlagen. Eine Daumenregel besagt, dass ein halber Temperaturhub die Leistungszahl verdoppelt, oder das jedes Grad weniger Temperaturhub etwa 2% bis 3% weniger Kompressionsenergieeinsatz erfordert. Ersichtlich wird dieser Zusammenhang mit der Betrachtung des idealen Carnot Wirkungsgrades η_{c} = (T_{warm}-Tₖₐₗₜ)/T_{warm} für Kreisprozesse.

Einem möglichst kleinen und damit effizienten Temperaturhub stehen jedoch die praktischen Anforderungen entgegen. Beispielsweise der für eine Klimaanlage maximal benötigte Temperaturhub bei hohen Außentemperaturen. Eine bekannte Lösung ist die Aufteilung des Gesamttemperaturhubes auf zwei Einzeltemperaturhübe mit zwei in einer Kaskade gekoppelten Kreisprozessanlagen. Kaskaden, nach dem Stand der Technik, bedingen den parallelen Betrieb beider gekoppelter Kreisprozessanlagen. Dabei wird die Wärme aus dem Kondensator einer ersten Kreisprozessanlage mit dem Verdampfer einer zweiten Kreisprozessanlage aufgenommen.

Die Erfindung bietet eine neue Lösung um verschiedene Kreisprozessanlagen parallel oder in einer Kaskade also seriell zu betreiben. Behältermodule innerhalb des Speicherbehälters erfüllen die Funktion einer Weiche für Wärmeenergie. Damit wird die serielle oder parallele Schaltung von zwei oder mehreren Kreisprozessanlagen ermöglicht.

Der erfindungsgemäße modulare Aufbau ermöglicht es einfach Wärmeenergie aus einem mittleren Temperaturniveau einer Kaskade, etwa auf dem Niveau der Kondensationstemperatur der ersten Stufe, aus dem Speicherbehälter zu entziehen, oder umgekehrt dort Wärme einzubringen. In dem zuständigen Behältermodul wird die Wärme über die angeschlossenen Wärmetauscher aus- oder eingebracht.

Im Falle einer erfindungsgemäßen Kaskadenschaltung von zwei Kreisprozessanlagen befinden sich innerhalb des koppelnden Behältermoduls mindestens der Kondensator einer ersten Kreisprozessanlage und der Verdampfer einer zweiten Kreisprozessanlage. Zusätzlich eingebaute Wärmetauscher sind geeignet Wärme aus oder in dieses Behältermodul zu übertragen.

Erfindungsgemäß können die über Behältermodule gekoppelten Kreisprozessanlagen auch einzeln, unabhängig von anderen im Verbund befindlichen Kreisprozessanlagen, betrieben werden. Beispielsweise kann die erzeugte Wärme, einer ersten Kreisprozessanlage, teilweise oder vollständig aus dem Behältermodule in eine Wärmesenke übertragen werden. In diesem Betriebszustand muss die zweite Kreisprozessanlage nicht in Betrieb genommen werden um den Wärmeabtransport vom Kondensator der ersten Kreisprozessanlage zu gewährleisten. Auch der Betrieb der zweiten Kreisprozessanlage kann unabhängig erfolgen wenn eine externe Wärmequelle die Verdampferwärme in das entsprechende Behältermodul überträgt.

Erfindungsgemäß ergeben sich, durch die Kopplung mittels Behältermodulen, besondere Effizienzvorteile bei der Leistungsanpassung von Wärmepumpen und Kälteanlagen.

Jahres- und Tagestemperaturschwankungen ändern die Anforderungen für alle Kühl- und Heizprozesse. Der sogenannte Teillastbetrieb ist der weit überwiegende Betriebszustand. Bisherige Anlagen nach dem Stand der Technik müssen im Hinblick auf die Maximalleistung ausgelegt sein und sind nur begrenzt regelbar. Der Volllastbetrieb ist so ausgelegt, dass beispielsweise bei Kälteanlagen auch noch bei höchsten Außentemperaturen eine Kondensationstemperatur, die über der Außentemperatur liegt, erreicht werden kann. Die schlechte Teillastanpassung erinnert stark an Verbrennungsmotoren im Straßenverkehr. Dort kann der Wirkungsgrad im Teillastbetrieb bei 15% bis 20% liegen. Die Leistungsanpassung bei Kältemaschinen und Wärmepumpen wird nach dem Stand der Technik beispielsweise über eine Anpassung der Kompressorleistung, der Kompressordrehzahl, über eine Änderung der Kompression oder Maßnahmen innerhalb der Kreisprozessanlagen wie beispielweise Zwischenkühlung im Arbeitsstoffkreislauf oder durch Druckänderung mithilfe der Expansionseinrichtung erreicht.

Der relevante Teillastbetrieb wird erfindungsgemäß äußerst effizient durch den selektiven Betrieb einzelner Kreisprozesse erreicht. Der thermische Puffer in Form des koppelnden Wärmeträgermediums ermöglicht den zeitweise unabhängigen zyklischen Einsatz von zwei oder mehr Kreisprozessanlagen und damit eine gleitende, an die Zieltemperatur angenäherte, Temperatur innerhalb der Behältermodule. Der zyklische Betrieb der Kreisprozessanlagen erlaubt eine schrittweise Temperaturänderung in den jeweiligen Behältermodulen. Erfindungsgemäß besteht eine Funktion der Behältermodule auch darin, dass innerhalb eine von außen unbeeinflusste Strömung ermöglicht wird. Die Strömung bleibt weitgehend unabhängig von Strömungen in anderen Behältermodulen oder von der im Speicherbehälter.

Erfindungsgemäß erfolgt die Teillastanpassung beispielsweise bei dem Einsatz von zwei Kreisprozessanlagen besonders effizient. Zielgenau, in Abhängigkeit der jeweils verfügbaren Wärmequellen und Wärmesenken, können einer oder beide Kreisprozesse mit kleinem Temperaturhub betrieben werden. Ohne weiteren hydraulischen Aufwand können beliebige Wärmequellen und Wärmesenken parallel und sequentiell genutzt werden. Gleichzeitig sinkt die Rücklauftemperatur des sekundären Wärmeträgermediums durch den gezielten Betrieb einzelner Kreisprozessanlagen. Durch die Temperaturabsenkung im Rücklauf vergrößert sich der Wärmestrom vom angeschlossenen externen Wärmetauscher.

Erfindungsgemäß stellt sich innerhalb des Wärmeträgermediums im Speicherbehälter ein aufsteigender Temperaturgradient ein. Durch den Betrieb der Kreisprozessanlagen steht in den einzelnen Behältermodulen erfindungsgemäß jeweils eine Wärmemenge mit unterschiedlichen Temperaturen zur Wärmenutzung zur Verfügung. Die einzelnen Behältermodule und das darin befindliche Wärmeträgermedium, sind gegenüber dem Speicherbehälter und den Behältermodulen soweit abgedichtet, dass erzwungen Konvektion, beispielsweise durch die Umwälzung des Wärmeträgermediums, weitgehend unabhängig innerhalb der Modulbehälter stattfinden kann.

Die Erfindung zeichnet sich durch die Möglichkeit aus, dass mehrere Temperaturzonen mit verhältnismäßig strenger Temperaturabgrenzung innerhalb des Speicherbehälters zur Nutzung bereitgestellt werden können. Die Anzahl der Temperaturzonen ist abhängig von der Zahl der eingebauten Behältermodule. Darüber hinaus können die unterschiedlich temperierten Wärmepuffer innerhalb der Behältermodule gleichzeitig mit Wärmequellen und Wärmesenken Wärme austauschen.

Erfindungsgemäß sind die Wärmetauscher, welche im Speicherbehälter untergebracht sind und gleichzeitig hydraulisch mit externen Wärmequellen und Wärmesenken verbunden sind, in ihrem nach außerhalb des Speicherbehälters führenden Wärmetauscherkanal mit einem sekundären Wärmeträgermedium befüllt. Vorzugsweise besteht das sekundäre Wärmeträgermedium aus Wasser mit Ethylenglykol oder reinem Wasser. Erfindungsgemäß kommt das sekundäre Wärmeträgermedium nie direkt mit Arbeitsstoff in Kontakt. Arbeitsstoff kann nur in einem Schadensfall aus einer Kreisprozessanlage austreten. Wenn der Schaden direkt innerhalb eines Wärmetauschers auftritt kommt auch der zweite Kreis dieses Wärmetauschers in Kontakt mit dem Arbeitsstoff. Erfindungsgemäß wird die Übertrittsicherheit des Arbeitsstoffes bis außerhalb des Speicherbehälters durch die mittelbare Übertragung der Wärme über das Wärmeträgermedium erreicht. Dabei zirkuliert das Wärmeträgermedium innerhalb des Behältermoduls zwischen den einzelnen Wärmetauschern. Die mittelbare Wärmeübertragung über das Wärmeträgermedium innerhalb der Behältermodule sichert Schadensfälle von austretendem Arbeitsstoff infolge von defekten an der Kreisprozessanlage und auch von Schäden innerhalb der Verdampfer und Kondensatoren ab. Versagende Trennflächen beziehungsweise Wärmetauscherflächen, der im Gegenstromprinzip von zwei getrennten Medien durchströmten Wärmetauscher, haben zur Folge, dass die beiden Medien sich vermischen. Dieser Schadensfall führt jedoch zu keinem Kontakt mit dem getrennten Kreislauf in einem weiteren Wärmetauscher, welcher beispielsweise nach außen zu einer Wärmequelle oder Wärmesenke führt. Nach einem Übertritt des Arbeitsstoffes in das Wärmeträgermedium stoppt der Kreisprozess in der Kreisprozessanlage infolge Arbeitsstoffmangel.

Erfindungsgemäß sind die Behältermodule vorzugsweise so dimensioniert, dass sie in der Anzahl und der Größe aufeinander abgestimmt sind und sich am Speicherbehälterboden oder einer Zwischenkonstruktion abstützen. Vorzugsweise sind Speicherbehälter und dazugehörige Behältermodule so dimensioniert, dass gerade zwei, drei oder vier Behältermodule zusammen die Innenhöhe des Speicherbehälters erreichen.

Erfindungsgemäß können die Behältermodule unterschiedliche Volumen aufweisen. Durch die Kombination unterschiedlicher Behältermodulgrößen ergibt sich erfindungsgemäß eine weitere Möglichkeit der Leistungsabstimmung für unterschiedliche Wärmequellen, Wärmesenken und der im Speicherbehälter eingesetzten Kreisprozessanlagen. Nur zwei oder drei unterschiedliche Behältermodulgrößen lassen eine Vielzahl neuer Auslegungsvarianten zu.

Erfindungsgemäß erfordert die kostenrelevante Einsparung an Materialstärke bei den Behältermodulgehäusen vorzugsweise deren Abstützung am Speicherbehälterboden. Die maximale Belastung der Behältermodule ergibt sich bei der Befüllung mit einem Wärmeträgermedium. Erfindungsgemäß werden vorzugsweise die Behältermodule gleichzeitig wie der verbleibende Speicherbehälterinhalt mit einem Wärmeträgermedium aufgefüllt. Vorzugsweise sind dazu kleine Öffnungen oder Ventile in den Behältermodulgehäusen vorgesehen. Durch das simultane Auffüllen und die ausgleichen Funktion der Ausgleichsöffnungen oder Ventile, werden Belastungen durch Druckunterschiede an den Gehäusen der Behältermodule weitgehend vermieden.

Aus Gründen rationeller Fertigung ist beispielsweise die Montage von drei am Speicherbehälterdeckel befestigten Behältermodulen auch dann sinnvoll, wenn nur zwei Behältermodule zur Wärmeübertragung notwendig sind. Das trifft zu, wenn nur eine Kreisprozessanlage eingebaut ist. Erfindungsgemäß dient in einer solchen Anwendungsvariante das dritte Behältermodul zur Abstützung der benachbarten Behältermodule. Innerhalb dieses Behältermoduls befindet sich dabei vorzugsweise ein Wärmeträgermedium oder ein Wärmeträgermedium mit Anteilen eines Latentspeichermediums.

Erfindungsgemäß ist vorgesehen, dass zum Zwecke der Wartung oder Reparatur eine einfache Abtrennung der Kreisprozessanlagen von den Behältermodulen beispielsweise mittels Schnellkupplungen erfolgen kann. Dazu werden vorzugsweise die Wärmetauscher in der Funktion von Verdampfer und Kondensator der Kreisprozessanlage außerhalb der Behältermodule jedoch innerhalb des Speicherbehälters montiert. Der jeweilige zweite Wärmetauscherkanal der Verdampfer und Kondensatoren zur Wärmeaufnahme und zur Wärmeabgabe ist hydraulisch mit dem Wärmeträgermedium der zugeordneten Behältermodule verbunden.

Erfindungsgemäß ist vorteilhafterweise weiterhin vorgesehen, dass wesentliche Komponenten der Kreisprozessanlage, wie Kompressor, Drosseleinrichtung, Verdampfer und Kondensator gemeinsam an einer Haltevorrichtung montiert sind. Erfindungsgemäß können auf diese Weise die Kreisprozessanlagen, als komplette Einheit, getrennt von den Behältermodulen transportiert und gewartet werden.

Erfindungsgemäß wird mit der Montage der Verdampfer und Kondensatoren, außerhalb der Behältermodule und innerhalb des Speicherbehälters, eine anteilige Wärmeübertragung über die Außengehäuse der Wärmetauscher genutzt um einen Temperaturgradienten im Wärmeträgermedium zu erzeugen. Vorteilhafterweise kann Phasenwechselmaterial im Speicher damit beschleunigt als Speichermaterial für Nutzkälte oder Wärme benutzt werden.

### Figurenbeschreibung

Weitere vorteilhafte Ausgestaltungen der erfindungsgemäßen Vorrichtungen werden anhand von in den Zeichnungen dargestellten Ausführungsbeispielen näher erläutert. Es zeigt:

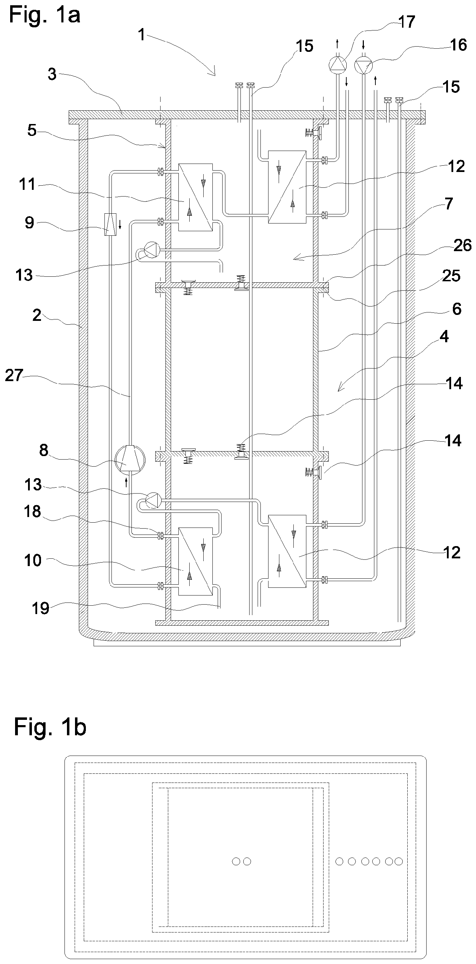

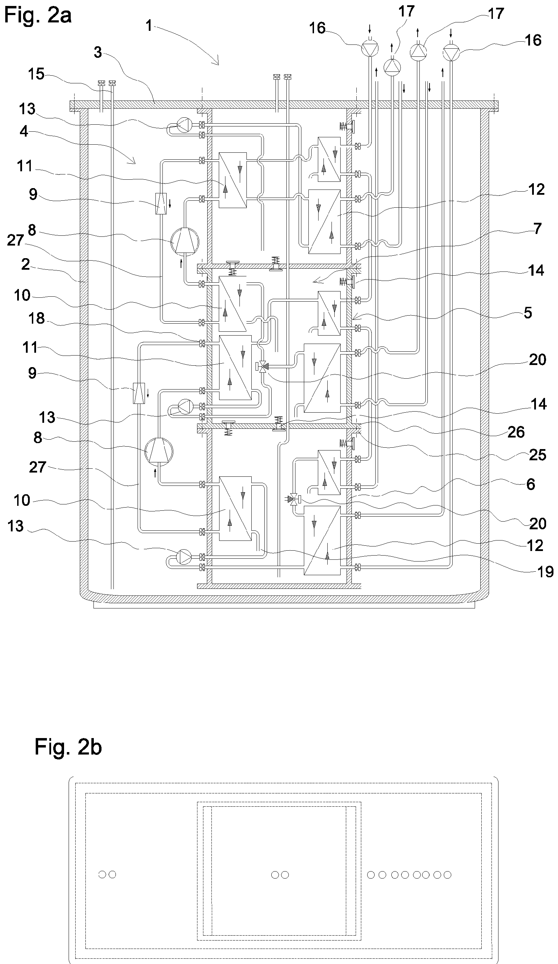

Fig. 1 einen schematisch dargestellten Speicherbehälter mit einer innerhalb des Speicherbehälters angeordneten Kreisprozessanlage, gefüllt mit einem Wärmeträgermedium und zwei Behältermodulen, zwei Strömungserzeugungseinrichtungen sowie einem Behältermodulgehäuse innerhalb des Speicherbehälters. Die Ausführung ist hermetisch dicht gegenüber dem innerhalb der Kreisprozessanlage verwendeten Arbeitsstoff. Die Fig. 1 ist in zwei Zeichnungen dargestellt wobei die Fig. 1a eine vertikale Schnittdarstellung ist und Fig. 1b eine Draufsicht. In den Fig. 2 bis Fig. 4 ist die Aufteilung der Zeichnung identisch.
Fig. 2 einen schematisch dargestellten Speicherbehälter mit zwei innerhalb des Speicherbehälters angeordneten Kreisprozessanlagen, gefüllt mit einem Wärmeträgermedium und drei Behältermodulen sowie drei Strömungserzeugungseinrichtungen. Zwei Schaltventile in Behältermodulen erlauben die selektive Nutzung einzelner Wärmetauscher.

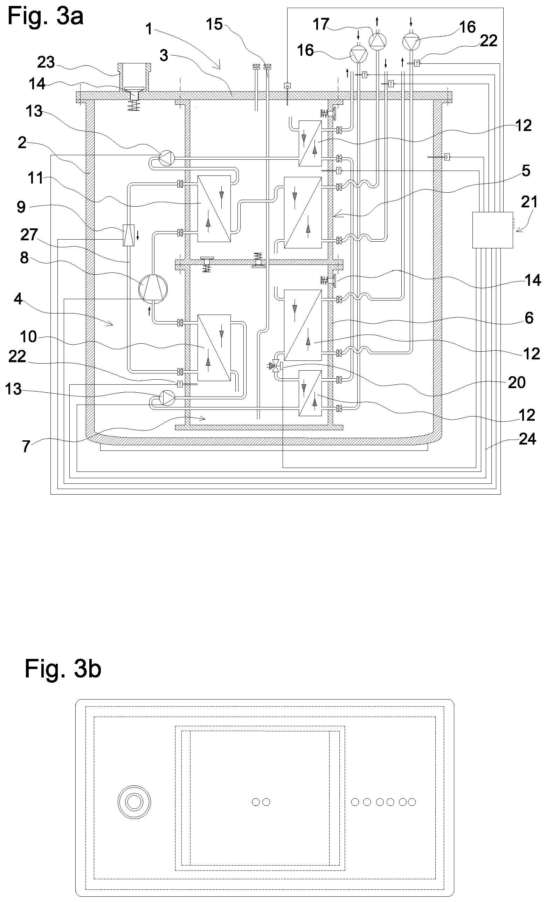

Fig. 3 einen schematisch dargestellten Speicherbehälter mit einer innerhalb des Speicherbehälters angeordneten Kreisprozessanlage, gefüllt mit einem Wärmeträgermedium und zwei Behältermodulen, zwei Strömungserzeugungseinrichtungen und einem nach außen führenden Sicherheitsventil zum Anschluss einer Rohrleitung oder eines Schlauches um einen Fluidüberdruck nach außen zu leiten, sowie einer Steuerungseinrichtung und Temperatur-, Druck- und Strömungssensoren.

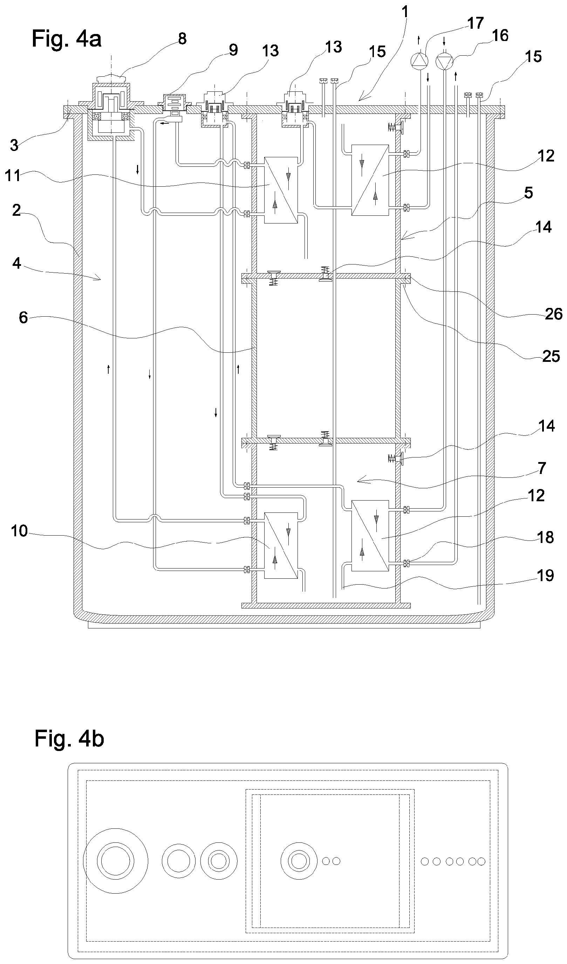

Fig. 4 einen schematisch dargestellten Speicherbehälter wie Fig. 1 in einer Ausführung mit außenliegenden Antrieben für Kompressor, Drosseleinrichtung und Strömungserzeugungseinrichtungen. Die einzelnen Antriebe sind hermetisch gegenüber Fluiden abgedichtet. Dazu werden hier Spaltrohre oder Magnetkupplungen verwendet, welche eine hermetische Trennung bewerkstelligen.

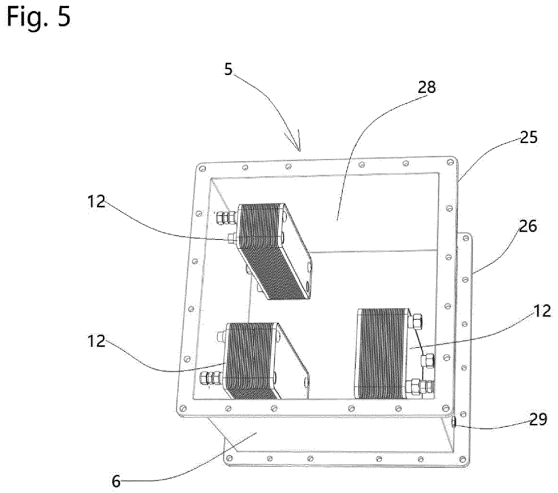

Fig. 5 eine schematische perspektivische Darstellung eines Behältermoduls mit oben offener Montageöffnung und drei darin befindlichen Wärmetauschern, wobei jeweils ein Paar Anschlussleitungen jedes Wärmetauschers in der Behältermodulwand enden und dort festgelegt sind.

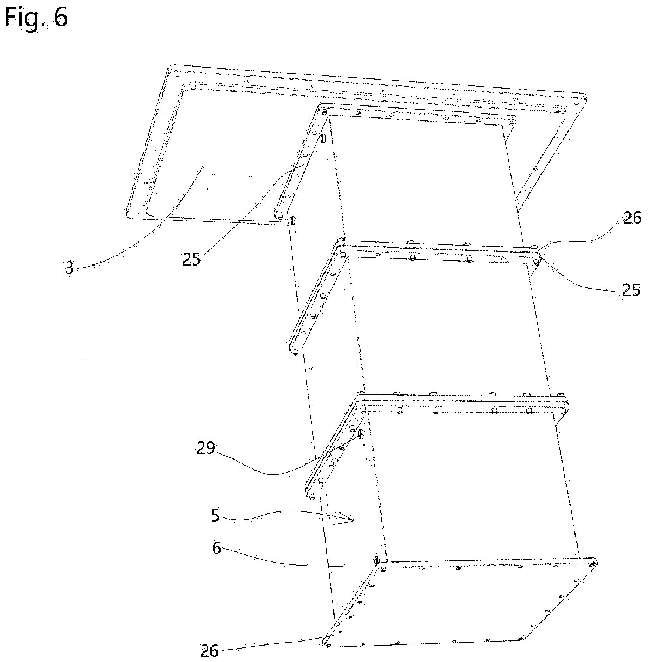

Fig. 6 drei schematisch und perspektivisch dargestellte Behältermodule welche an dem perspektivisch dargestellten Gehäusedeckel des Speicherbehälters von unten festgelegt sind.

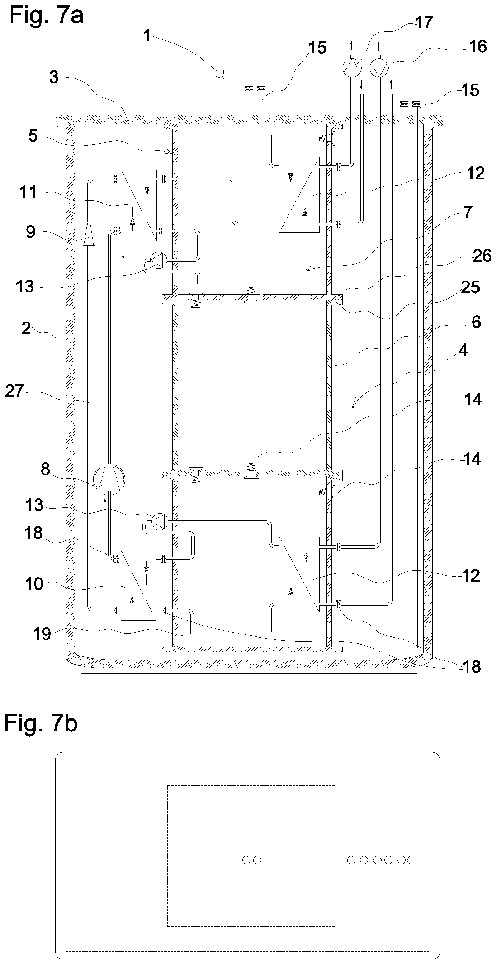

Fig. 7 einen schematisch dargestellten Speicherbehälter mit einer, innerhalb des Speicherbehälters, angeordneten Kreisprozessanlage, gefüllt mit einem Wärmeträgermedium und zwei Behältermodulen, zwei Strömungserzeugungseinrichtungen sowie einem Behältermodulgehäuse innerhalb des Speicherbehälters. Die Ausführung ist hermetisch dicht gegenüber dem innerhalb der Kreisprozessanlage verwendeten Arbeitsstoff. Unterschiedlich zu Fig. 1 ist die Kreisprozessanlage komplett mit geschlossenen Kältekreis abkoppelbar von den Behältermodulen.

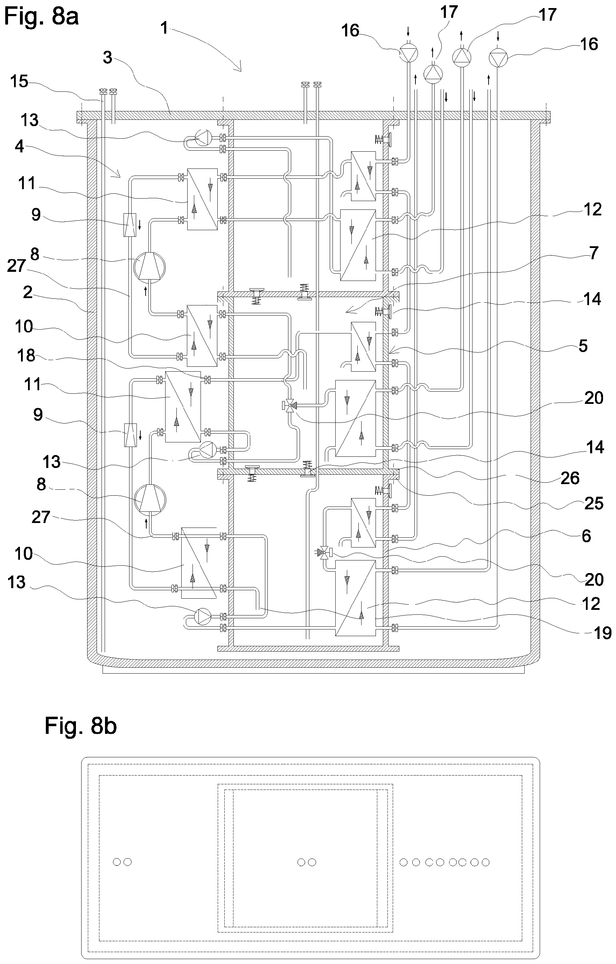

Fig. 8 einen schematisch dargestellten Speicherbehälter mit zwei innerhalb des Speicherbehälters angeordneten Kreisprozessanlagen, gefüllt mit einem Wärmeträgermedium und drei Behältermodulen sowie drei Strömungserzeugungseinrichtungen. Zwei Schaltventile in Behältermodulen erlauben die selektive Nutzung einzelner Wärmetauscher. Unterschiedlich zu Fig. 2 sind die beiden Kreisprozessanlagen komplett mit geschlossenen Kältekreisen abkoppelbar von den Behältermodulen.

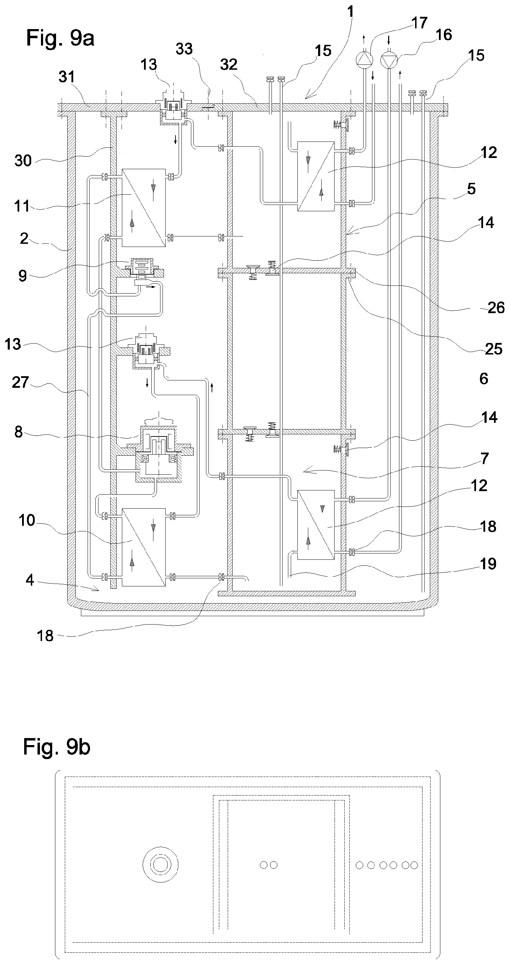

Fig. 9 einen schematisch dargestellten Speicherbehälter in einer Ausführung mit außenliegendem Antrieb für eine Strömungszeugungseinrichtung und mit innenliegendem Kompressor, innenliegender Drosseleinrichtung und innenliegender Strömungserzeugungseinrichtung. Die einzelnen Antriebe sind hermetisch gegenüber Fluiden abgedichtet. Dazu werden Spaltrohre oder Magnetkupplungen verwendet, welche eine hermetische Trennung bewerkstelligen. Unterschiedlich zu Fig. 4a ist die Kreisprozessanlage komplett mit geschlossenen Kältekreis abkoppelbar von den Behältermodulen. Die Komponenten der Kreisprozessanlage sind an einer Haltevorrichtung 30 zu einer Montageeinheit zusammenmontiert.

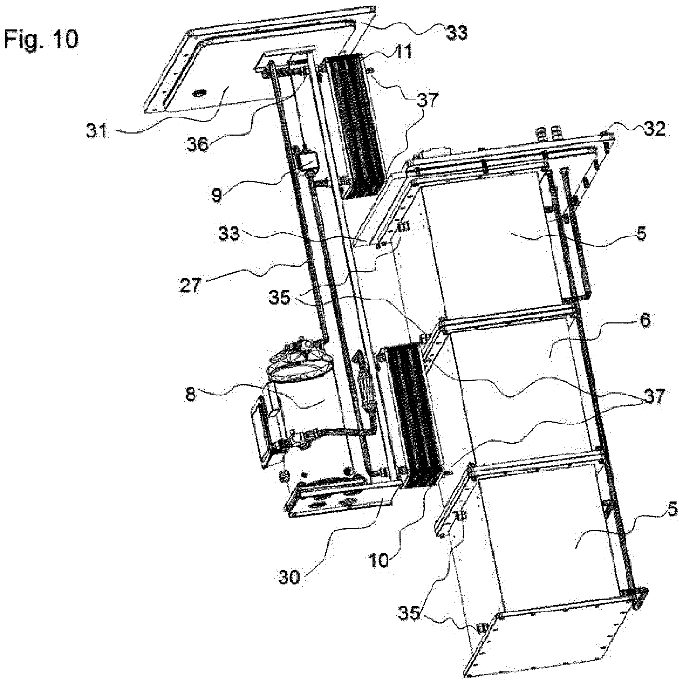

Fig. 10 drei schematisch und perspektivisch dargestellte Behältermodule welche an einem perspektivisch dargestellten segmentierten Speicherbehälterdeckel von unten festgelegt sind. An einem zweiten Segment des Speicherbehälterdeckels ist eine, perspektivisch weiter nach oben gerückte, Kreisprozessanlage perspektivisch dargestellt welche über Kupplungen mit dem Solekreislauf der Behältermodule verbunden werden kann, und als komplette Montageeinheit in den Speicherbehälter abgesenkt werden kann.

Figur 1a zeigt einen schematisch dargestellten Speicherbehälter 1 zur Wärme- und Nutzkältebereitstellung, bestehend aus einem Speicherbehältergehäuse 2 und einem Speicherbehälterdeckel 3. Der Innenraum des Speicherbehälters ist mit einem Wärmeträgermedium 4 gefüllt. Im Innenraum befinden sich zwei Behältermodule 5, welche am Speicherdeckel 3 festgelegt sind. Der oberen Rand des Behältermodulgehäuses 6 weist eine Verbindungsreinrichtung 25 auf und ist an dem Speicherdeckel 3 festgelegt. An einer unteren Verbindungsreinrichtung 26 ist ein benachbartes Behältermodulgehäuses 6 mit dem dazugehörigen oberen Verbindungsflash 25 festgelegt. Durch den Speicherdeckel 3 verlaufen Füllrohre 15 welche das Befüllen oder Entleeren des Speicherbehälters 1 am Einsatzort ermöglichen. Die Druckventile 14 in den Behältermodulgehäusen 6 ermöglichen eine Druckbegrenzung zwischen Behältermodulen 5 untereinander und dem Speicherbehälter 1. Innerhalb des Speicherbehälters 1 befindet sich eine Kreisprozessanlage 27 bestehend aus einem Kompressor 8, einem Verdampfer 10, einem Kondensator 11 und einer Drosseleinrichtung 9, wobei der Verdampfer 10 und der Kondensator 11 als Wärmetauscher 10, 11, 12 mit zwei Kammervolumen beziehungsweise zwei Wärmetauscherkanälen ausgeführt sind, beispielsweise als Plattenwärmetauscher. Die Wärmeübertragung zu weiteren Wärmetauschern 12, welche mit einer Wärmequelle oder einer Wärmesenke verbindbar sind, erfolgt hauptsächlich über das Wärmeträgermedium 7 welches mittels der Strömungserzeugungseinrichtungen 13 innerhalb des Behältermoduls 5 und gleichzeitig innerhalb des dort angeordneten Wärmetauschers 12 umgewälzt wird. Die Wärmesenken sind hydraulisch mit der Umwälzpumpe 17 und damit mit dem, innerhalb des Behältermoduls 5 angeordneten, Wärmtauschers 12 verbindbar. Die Wärmequellen sind mit der Umwälzpumpe 16 hydraulisch verbindbar. Die hier gezeigte Vorrichtung dichtet den Arbeitsstoff der Kreisprozessanlage 27, welche im Innenraum des Speicherbehälters 1 angeordnet ist, hermetisch ab. Die mittelbare Wärmeübertragung über das Wärmeträgermedium 7 innerhalb der Behältermodule 5 sichert die Schadensfälle von austretendem Arbeitsstoff infolge von defekten an der Kreisprozessanlage 27 und auch von Schäden innerhalb der Verdampfer 10 und Kondensatoren 11 ab. Bei im Gegenstromprinzip von zwei getrennten Medien durchströmten Wärmetauschern 10, 11, 12 haben versagende Trennflächen beziehungsweise Wärmetauscherflächen zur Folge, dass diese beiden Medien sich dadurch vermischen. Dieser Schadensfall führt hier jedoch zu keinem Kontakt mit dem getrennten Kreislauf in einem weiteren Wärmetauscher 12, welcher nach außen zu einer Wärmequelle oder Wärmesenke führt. Nach einem Übertritt des Arbeitsstoffes in das Wärmeträgermedium 7 stoppt der Kreisprozess in der Kreisprozessanlage 27 infolge eines Mangels an Arbeitsstoff.

Figur 1b zeigt die Draufsicht auf den schematisch dargestellten Speicherbehälter 1, welcher in Fig. 1a dargestellt ist.

Figur 2a zeigt einen schematisch dargestellten Speicherbehälter 1 zur Wärme- und Nutzkältebereitstellung, bestehend aus einem Speicherbehälter 1 und zwei darin angeordnete Kreisprozessanlagen 27. Zusätzlich befinden sich darin drei Behältermodule 5, welche in einem Stapel an ihren jeweiligen Verbindungsreinrichtungen 25, 26 zusammengefügt sind. Das obere Behältermodul ist mit seiner Verbindungsreinrichtung 25 an dem Speichergehäusedeckel 3 festgelegt. Die beiden Kreisprozessanlagen können unabhängig voneinander betrieben werden. Die Wärme, Resultat aus dem Betrieb der unteren Kreisprozessanlage 27 kann über einen Wärmetauscher 12, welcher in dem mittleren Behältermodul 5 angeordnet ist, in eine Wärmesenke abgegeben werden. Alternativ kann die Wärme an den Verdampfer 10 der oberen Kreisprozessanlage 27 abgegeben werden, um nach einer weiteren Energiezufuhr, über die in dem oberen Behältermodul 5 angeordneten Wärmetauscher 12 an eine Wärmesenke abgeben werden. Dazu wird das Schaltventil 20 vorzugsweise in die eingezeichnete Schaltstellung gebracht. Der Wärmetransport erfolgt über das Wärmeträgermedium 7 mittels der hydraulisch angeschlossenen Umwälzpumpe 17. In einer dritten möglichen Betriebsvariante erfolgt die Wärmezufuhr aus externen Wärmequellen über Wärmetauscher 12 vorzugsweise in dem mittleren Behältermodul 5 und wird von dort, über den Verdampfer 10 der oberen Kreisprozessanlage 27, aufgenommen und kann nach weiterer Energieaufnahme durch die Kreisprozessanlage 27 über Wärmetauscher 12 in dem oberen Behältermodul 5 an eine externe Wärmesenke abgegeben werden. Die jeweils rechts in den Behältermodulen 5 angeordneten Wärmetauscher 12 sind hydraulisch mit den Umwälzpumpen 17 verbunden und können mit Wärmesenken verbunden werden. Die mit den Umwälzpumpen 16 verbundenen Wärmetauscher 12 sind mit einer Wärmequelle verbindbar. Die geometrisch kleiner gezeichneten Wärmetauscher 12 stellen beispielhaft die Einbindung einer Solarthermieanlage als Wärmequelle dar. In dieser Variante erfolgt der Eintrag der Wärmeenergie von dem oberen Wärmetauscher 12 zur weiteren Abkühlung über den mittleren Wärmetauscher 12, bis in den unteren Wärmetauscher 12. Über diese Anordnung wird die volle Quellentemperatur ausgeschöpft und über den maximal gekühlten Rücklauf eine größere Temperaturspreizung am Kollektor erreicht. Der weitere (größer gezeichneter) Wärmetauscher 12 im mittleren Behältermodul 5 ist mit einer Wärmesenke mittlerer Temperatur verbindbar, beispielsweise einer Fußbodenheizung. Für den Fall, dass diese Konfiguration zur Kühlung eingesetzt wird kann dies beispielsweise in zwei Betriebsarten geschehen. In der ersten Betriebsart, bei niedrigen Außentemperaturen und damit Rückkühltemperaturen, reicht der Betrieb der unteren Kreisprozessanlage 27. Die Rückkühlung erfolgt in diesem Fall über den, in dem mittleren Behältermodul angeordneten Wärmetauscher 12. Für höhere erforderliche Rückkühltemperaturen erfolgt die notwendige Temperaturerhöhung über die zweite, oben angeordnete, Kreisprozessanlage 27. Der Wärmetransport zur Wärmesenke erfolgt bei der höheren Rückkühltemperatur über Wärmetauscher 12 im oben angeordneten Behältermodul 5.

Figur 2b zeigt die Draufsicht auf den schematisch dargestellten Speicherbehälter 1, welcher in Fig. 2a dargestellt ist.

Figur 3a zeigt einen schematisch dargestellten Speicherbehälter 1 zur Wärme- und Nutzkältebereitstellung mit einer internen Kreisprozessanlage, einer Steuereinrichtung 21, sowie einem Überdruckventil 14 mit einem Leitungsanschluss 23 für den Anschluss einer Rohrleitung oder einer Schlauchleitung um damit Fluide aus dem Speicherbehälter 1 nach außen beispielsweise außerhalb eines Gebäudes leiten zu können. Die Möglichkeit der sicheren Ableitung eines Fluidüberdruckes, welcher innerhalb des Speicherbehälters 1 beispielsweise durch einen Schaden an Arbeitsstoff führenden Komponenten entstehen kann, ertüchtigt diese Vorrichtung zur Verwendung von Arbeitsstoffen wie Propan, Isobutan oder anderen reinen Kohlenwasserstoffen. Diese Arbeitsstoffe expandieren bei einem Schaden an unter hohem Druck stehenden Komponenten einer Kreisprozessanlage 27, und könnten nur in einem druckfesten Speicherbehälter 1 zurückgehalten werden. Alternativ zur Ableitung eines Fluidüberdrucks nach außen, kann der Leitungsanschluss auch für eine Verbindungsleitung zu einem zusätzlichen Expansionsbehälter genutzt werden.

Über die Steuerungseinrichtung 21 werden Temperaturen und Druckwerte über Druck- oder Temperatursensoren 22 ermittelt. Darüber hinaus können durch die Steuerungseinrichtung 21 die Komponenten der Kreisprozessanlage 27 wie die Drosseleinrichtung 9, der Kompressor 8, der Verdampfer 10 und der Kondensator 11 geregelt und gesteuert werden. Über die Funktionen der Kreisprozessanlage 27 hinaus können durch die Steuerungseinrichtung 21 weitere, den Wärmestrom bestimmende Komponenten über Signalleitungen 24 Ein- und Ausgeschaltet sowie geregelt werden. Die Regelgrößen welche an die Strömungserzeugungseinrichtungen 13 übermittelt werden beeinflussen die Intensität des Wärmeübergangs in den Wärmetauschern (10, 11, 12). Der überwiegende Anteil der Wärmeübertragung ist die konvektive Wärmeübertragung mittels des Wärmeträgermediums 7. Die Intensität der Anströmung ist somit der wesentliche Steuerungsparameter der Steuerungseinrichtung 21 zur Steuerung des Wärmeübergangs. Weiterhin ermöglicht die Ansteuerung der hydraulischen Schaltventils 20 durch die Steuerungseinrichtung 21 das Einbeziehen eines Wärmetauschers (10, 11, 12) in den Wärmestrom des Wärmeträgers 7 oder das Ausschließen eines Wärmetauschers (10, 11, 12) aus dem hydraulischen Kreislauf und damit aus dem Wärmestrom. Durch die Umschaltung des Schaltventils 20 durch die Steuerungseinrichtung 21 können unterschiedliche Wärmequellen ausgewählt, oder deren Anteile an den Gesamtwärmequellenstrom durch Zwischenstellungen des Schaltventils 20 variiert werden.

Die Ansteuerung der Umwälzpumpen 16 durch die Steuerungseinrichtung 21 regelt die den Einbezug und die Intensität des Einbezugs der Wärmequellen in den Gesamtwärmestrom des Speicherbehälters 1.

Figur 3b zeigt die Draufsicht auf den schematisch dargestellten Speicherbehälter 1, welcher in Fig. 3a dargestellt ist.

Figur 4a zeigt einen schematisch dargestellten Speicherbehälter 1 zur Wärme- und Nutzkältebereitstellung mit einer internen Kreisprozessanlage entsprechend der Figur 1a, wobei hier alle elektrischen Antriebe außen am Speicherbehälter 1 angeordnet sind. Die elektrischen Komponenten sind hermetisch gegenüber Fluiden, wie dem Arbeitsstoff der Kreisprozessanlage, und dem Wärmeträgermedium 7 und dem Wärmeträgermedium 8 abgedichtet. Die hermetische Abdichtung erfolgt über Magnetkupplungen, welche sich dadurch Auszeichen, dass die Kräfte nicht formschlüssig, sondern nur magnetisch durch eine Trennschicht übertragen werden. Bei Elektromotoren sind beispielsweise Stator und Rotor durch ein Spaltrohr getrennt. Spaltrohre bestehen in der Regel aus dünnwandigem Edelstahl oder Karbonwerkstoffen.

Figur 4b zeigt die Draufsicht auf den schematisch dargestellten Speicherbehälter 1, welcher in Fig. 4a dargestellt ist.

Figur 5 zeigt die perspektivische schematische Darstellung eines Behältermoduls 5 mit oben offenem Behältermodulgehäuse 6 in Form einer Montageöffnung 28 und drei darin befindlichen Wärmetauschern 12, wobei jeweils ein Paar Anschlussleitungen jedes Wärmetauschers 12 in der Behältermodulwand enden und dort in einem Anschlussverbinder 29 festgelegt sind. Am oberen Rand der Behältermodulgehäuse 6 ist jeweils ein Verbindungsreinrichtung 25 angeordnet welcher den Verschluss der Montageöffnung 28 ermöglicht.

Figur 6 zeigt perspektivisch drei Behältermodule 5 welche in einer stapelförmigen Anordnung zusammen an einem Speicherbehälterdeckel 3 von unten festgelegt sind. Dabei ist das untere Behältermodulgehäuse 6 durch seine obere Verbindungsreinrichtung 25 mit der unteren Verbindungsreinrichtung 26 des mittleren Behältermodulgehäuses 6 verbunden. Durch diese Verbindung verschließt der Boden des mittleren Behältermodulgehäuses 6 die Montageöffnung 28 des unteren Behältermodulgehäuses 6. Jeweils paarweise verschließen die Behältermodulgehäuse 6 die jeweiligen Montageöffnungen 28 der benachbarten Behältermodulgehäuse 6. Die Montageöffnung 28 des oberen Behältermodulgehäuses 6 ist durch die Verbindung mit dem Gehäusedeckel 3 des Speicherbehälters 1 verschlossen.

Figur 7a zeigt einen schematisch dargestellten Speicherbehälter 1 zur Wärme- und Nutzkältebereitstellung, bestehend aus einem Speicherbehältergehäuse 2 und einem Speicherbehälterdeckel 3. Der Innenraum des Speicherbehälters ist mit einem Wärmeträgermedium 4 gefüllt. Im Innenraum befinden sich zwei Behältermodule 5, welche am Speicherdeckel 3 festgelegt sind. Der oberen Rand des Behältermodulgehäuses 6 weist eine Verbindungsreinrichtung 25 auf und ist an dem Speicherdekel 3 festgelegt. An einer unteren Verbindungsreinrichtung 26 ist ein benachbartes Behältermodulgehäuses 6 mit dem dazugehörigen oberen Verbindungsflash 25 festgelegt. Durch den Speicherdeckel 3 verlaufen Füllrohre 15 welche das Befüllen oder Entleeren des Speicherbehälters 1 am Einsatzort ermöglichen. Die Druckventile 14 in den Behältermodulgehäusen 6 ermöglichen eine Druckbegrenzung zwischen Behältermodulen 5 untereinander und dem Speicherbehälter 1. Innerhalb des Speicherbehälters 1 befindet sich eine Kreisprozessanlage 27 bestehend aus einem Kompressor 8, einem Verdampfer 10, einem Kondensator 11 und einer Drosseleinrichtung 9, wobei der Verdampfer 10 und der Kondensator 11 als Wärmetauscher 10, 11, 12 mit zwei Kammervolumen beziehungsweise zwei Wärmetauscherkanälen ausgeführt sind, beispielsweise als Plattenwärmetauscher. Die Wärmeübertragung zu weiteren Wärmetauschern 12, welche mit einer Wärmequelle oder einer Wärmesenke verbindbar sind, erfolgt hauptsächlich über das Wärmeträgermedium 7 welches mittels der Strömungserzeugungseinrichtungen 13 innerhalb des Behältermoduls 5 und gleichzeitig innerhalb der hydraulisch verbundenen Wärmetauscher 10, 11, 12 umgewälzt wird. Die Wärmesenken sind hydraulisch mit der Umwälzpumpe 17 und damit mit dem, innerhalb des Behältermoduls 5 angeordneten, Wärmtauschers 12 verbindbar. Die Wärmequellen sind mit der Umwälzpumpe 16 hydraulisch verbindbar. Die hier gezeigte Vorrichtung dichtet den Arbeitsstoff der Kreisprozessanlage 27, welche im Innenraum des Speicherbehälters 1 angeordnet ist, hermetisch ab. Die mittelbare Wärmeübertragung über das Wärmeträgermedium 7 innerhalb der Behältermodule 5 sichert die Schadensfälle von austretendem Arbeitsstoff infolge von defekten an der Kreisprozessanlage 27 und auch von Schäden innerhalb der Verdampfer 10 und Kondensatoren 11 ab. Bei von zwei getrennten Medien durchströmten Wärmetauschern 10, 11, 12 haben versagende Trennflächen beziehungsweise Wärmetauscherflächen zur Folge, dass diese beiden Medien sich dadurch vermischen. Dieser Schadensfall führt hier jedoch zu keinem Kontakt mit dem getrennten Kreislauf in einem weiteren Wärmetauscher 12, welcher nach außen zu einer Wärmequelle oder Wärmesenke führt. Nach einem Übertritt des Arbeitsstoffes in das Wärmeträgermedium 7 stoppt der Kreisprozess in der Kreisprozessanlage 27 infolge eines Mangels an Arbeitsstoff.

Unterschiedlich zu Figur 1a sind hier der Verdampfer 10 und der Kondensator 11 über Verschraubungen 18 von den hydraulischen Leitungen in den Behältermodulen 5 trennbar ausgeführt.

Figur 7b zeigt die Draufsicht auf den schematisch dargestellten Speicherbehälter 1, welcher in Fig. 7a dargestellt ist.

Figur 8a zeigt einen schematisch dargestellten Speicherbehälter 1 zur Wärme- und Nutzkältebereitstellung, bestehend aus einem Speicherbehälter 1 und zwei darin angeordnete Kreisprozessanlagen 27. Zusätzlich befinden sich darin drei Behältermodule 5, welche in einem Stapel an ihren jeweiligen Verbindungsreinrichtungen 25, 26 zusammengefügt sind. Das obere Behältermodul ist mit seiner Verbindungsreinrichtung 25 an dem Speichergehäusedeckel 3 festgelegt. Die beiden Kreisprozessanlagen können unabhängig voneinander betrieben werden. Die Wärme, Resultat aus dem Betrieb der unteren Kreisprozessanlage 27 kann über einen Wärmetauscher 12, welcher in dem mittleren Behältermodul 5 angeordnet ist, in eine Wärmesenke abgegeben werden. Alternativ kann die Wärme an den Verdampfer 10 der oberen Kreisprozessanlage 27 abgegeben werden, um nach einer weiteren Energiezufuhr, über die in dem oberen Behältermodul 5 angeordneten Wärmetauscher 12 an eine Wärmesenke abgeben werden. Dazu wird das Schaltventil 20 vorzugsweise in die eingezeichnete Schaltstellung gebracht. Der Wärmetransport erfolgt über das Wärmeträgermedium 7 mittels der hydraulisch angeschlossenen Umwälzpumpe 17. In einer dritten möglichen Betriebsvariante erfolgt die Wärmezufuhr aus externen Wärmequellen über Wärmetauscher 12 vorzugsweise in dem mittleren Behältermodul 5 und wird von dort, über den Verdampfer 10 der oberen Kreisprozessanlage 27, aufgenommen und kann nach weiterer Energieaufnahme durch die Kreisprozessanlage 27 über Wärmetauscher 12 in dem oberen Behältermodul 5 an eine externe Wärmesenke abgegeben werden. Die jeweils rechts in den Behältermodulen 5 angeordneten Wärmetauscher 12 sind hydraulisch mit den Umwälzpumpen 17 verbunden und können mit Wärmesenken verbunden werden. Die mit den Umwälzpumpen 16 verbundenen Wärmetauscher 12 sind mit einer Wärmequelle verbindbar. Die geometrisch kleiner gezeichneten Wärmetauscher 12 stellen beispielhaft die Einbindung einer Solarthermieanlage als Wärmequelle dar. In dieser Variante erfolgt der Eintrag der Wärmeenergie von dem oberen Wärmetauscher 12 zur weiteren Abkühlung über den mittleren Wärmetauscher 12, bis in den unteren Wärmetauscher 12. Über diese Anordnung wird die volle Quellentemperatur ausgeschöpft und über den maximal gekühlten Rücklauf eine größere Temperaturspreizung am Kollektor erreicht. Der weitere (größer gezeichneter) Wärmetauscher 12 im mittleren Behältermodul 5 ist mit einer Wärmesenke mittlerer Temperatur verbindbar, beispielsweise einer Fußbodenheizung. Für den Fall, dass diese Konfiguration zur Kühlung eingesetzt wird kann dies beispielsweise in zwei Betriebsarten geschehen. In der ersten Betriebsart, bei niedrigen Außentemperaturen und damit Rückkühltemperaturen, reicht der Betrieb der unteren Kreisprozessanlage 27. Die Rückkühlung erfolgt in diesem Fall über den, in dem mittleren Behältermodul angeordneten Wärmetauscher 12. Für höhere erforderliche Rückkühltemperaturen erfolgt die notwendige Temperaturerhöhung über die zweite, oben angeordnete, Kreisprozessanlage 27. Der Wärmetransport zur Wärmesenke erfolgt bei der höheren Rückkühltemperatur über Wärmetauscher 12 im oben angeordneten Behältermodul 5. Unterschiedlich zu Figur 2a sind hier die Verdampfer 10 und die Kondensatoren 11 über Verschraubungen 18 von den hydraulischen Leitungen in den Behältermodulen 5 trennbar ausgeführt.

Figur 8b zeigt die Draufsicht auf den schematisch dargestellten Speicherbehälter 1, welcher in Fig. 8a dargestellt ist.

Figur 9a zeigt einen schematisch dargestellten Speicherbehälter 1 in einer Ausführung mit außenliegendem Antrieb für eine Strömungszeugungseinrichtung 13 und mit innenliegendem Kompressor 8, innenliegender Drosseleinrichtung 9 und innenliegender Strömungserzeugungseinrichtung 13. Die einzelnen Antriebe sind hermetisch gegenüber Fluiden abgedichtet. Dazu werden beispielsweise Spaltrohre oder Magnetkupplungen verwendet, welche eine hermetische Trennung bewerkstelligen. Unterschiedlich zu Fig. 4a sind die wesentlichen Bestandteile der Kreisprozessanlage 27 bestehend aus Verdampfer 10, Kompressor 8, Kondensator 11 und Drosseleinrichtung 9, mit einer Haltevorrichtung 30 verbunden. Die hydraulische Kopplung der Kreisprozessanlage mit den Behältermodulen und mit dem Wärmeträgerkreislauf erfolgt über Verschraubungen 18 oder Schnellkupplungen. Die Komponenten der Kreisprozessanlage 27 sind an einer Haltevorrichtung 30 zu einer Montageeinheit zusammenmontiert.

Figur 9b zeigt die Draufsicht auf den schematisch dargestellten Speicherbehälter 1, welcher in Fig. 9a dargestellt ist.

Fig. 10 zeigt schematisch und perspektivisch dargestellte Behältermodule 5 und Behältermodulgehäuse 6, welche an einem perspektivisch dargestellten segmentierten Speicherbehälterdeckel von unten festgelegt sind. Beide Segmente des Speicherbehälterdeckels 31, 32 erfüllen zusammengefasst die Funktion eines vollständigen Speicherbehälterdeckels. An einem ersten Segment 32 sind die Behältermodule und das Behältermodulgehäuse festgelegt. An einem zweiten Segment des Speicherbehälterdeckels 31 ist eine Kreisprozessanlage 27 mit Verdampfer 10, Kompressor 8, Drosseleinrichtung 9 und Kondensator 11 festgelegt. Aus Gründen der übersichtlicheren Darstellung ist diese Baugruppe 27, 30, 31 perspektivisch weiter nach oben gerückt dargestellt. Im Zustand der endgültigen betriebsfähigen Montage sind die Segmente des Speicherbehälterdeckels 31, 32 an der Dichtflächen 33 zusammengesetzt und die hydraulischen Anschlüsse 37 des Kondensators 11 mit den hydraulischen Verbindern 35 des oberen Behältermoduls verbunden. Die hydraulischen Anschlüsse des Verdampfers 10 sind im betriebsfertigen Montagezustand mit den hydraulischen Verbindern 35 des unteren Speicherbehältermoduls verbunden. Die Kreisprozessanlage 27 ist an einer Haltevorrichtung 30 montiert welche an einem Segment des Speicherdeckels 31 festgelegt ist. Der Speicherbehälter ist nicht dargestellt.

## Patentansprüche

1. Behältermodul (5) für einen Speicherbehälter (1) mit mindestens einer Kreisprozessanlage (27) zur Wärmeenergienutzung, wobei das Behältermodul (5) ein Behältermodulgehäuse (6) mit einer verschließbaren Montageöffnung (28) aufweist, wobei die Montageöffnung (28) zur Montage von Wärmetauschern (10, 11, 12) vorgesehen ist und Abmessungen aufweist, welche ein Einbringen eines Wärmetauschers (10, 11, 12) in das Behältermodulgehäuse (6) und dessen Festlegung und Anschluss in dem Behältermodulgehäuse (6) ermöglichen, und wobei in dem Behältermodulgehäuse (6) mindestens ein Wärmetauscher (10, 11, 12) angeordnet ist, wobei der mindestens eine Wärmetauscher (10, 11, 12) mit mindestens einem ersten Paar von Anschlussleitungen in Öffnungen der Gehäusewand des Behältermodulgehäuses (6) mündet und durch einen Anschlussverbinder (29) fluidführend verbindbar sind, **dadurch gekennzeichnet, dass** das Behältermodulgehäuse (6) zwei Verbindungseinrichtungen (25, 26) aufweist, wobei ein Behältermodulgehäuse (6) mit einer der Verbindungseinrichtungen (25) an einem weiteren Behältermodulgehäuse (6) an dessen Verbindungseinrichtung (26) so festgelegt werden kann, dass die Montageöffnung (28) des Behältermodulgehäuses (6) durch den Boden das weiteren Behältermodulgehäuses (6) verschlossen wird.

2. Behältermodul (5) für einen Speicherbehälter (1) mit mindestens einer Kreisprozessanlage (27) zur Wärmeenergienutzung nach Anspruch 1, **dadurch gekennzeichnet, dass** an oder in dem Behältermodulgehäuse (6) mindestens zwei Wärmetauscher (10, 11, 12) angeordnet sind, wobei die mindestens zwei Wärmetauscher (10, 11, 12) mit dem mindestens einen ersten Paar von Anschlussleitungen in Öffnungen der Gehäusewand des Behältermodulgehäuses (6) münden und durch den Anschlussverbinder (29) fluidführend verbindbar sind.

3. Behältermodul (5) für einen Speicherbehälter (1) mit mindestens einer Kreisprozessanlage (27) zur Wärmeenergienutzung, nach einem der voranstehenden Ansprüche, wobei das Behältermodulgehäuse (6) eine Vorrichtung zur Verbindung mit einer Haltevorrichtung aufweist, welche zwei oder mehr Behältermodule (5) innerhalb eines Speicherbehälters (1) aufnehmen kann.

4. Speicherbehälter (1) mit mindestens einer Kreisprozessanlage (27) zur Wärmeenergienutzung, wobei der Speicherbehälter (1) ein Speicherbehältergehäuse (2) mit einer Gehäuseöffnung und einen, lösbar mit dem Speicherbehältergehäuse (2) verbindbaren und die Gehäuseöffnung verschließenden Gehäusedeckel (3) aufweist, **dadurch gekennzeichnet, dass** in dem Speicherbehältergehäuse (2) mindestens zwei Behältermodule (5) nach einem der voranstehenden Ansprüche sind und dass einzelne Wärmetauscher (10, 11) aus zwei unterschiedlichen Behältermodulen (5) mit Hilfe von Fluidleitungen so mit Kreisprozessanlagenkomponenten verbunden sind, dass mindestens eine Kreisprozessanlage (27) betrieben werden kann, wobei in mindestens einer Kreisprozessanlage (27) ein geschlossener Kreisprozess mit einem Arbeitsstoff betrieben werden kann, welcher isoliert von dem Wärmeträgermedium (7) in den Innenräumen der Behältermodule (5) und isoliert von dem Wärmeträgermedium (4) in dem die Behältermodule (5) umgebenden Innenraum des Speicherbehälters (1) verwendet werden kann, wobei Wärmeströme aus Wärmequellen in einzelne Behältermodule (5) über weitere dort angeordnete Wärmetauscher (10, 11, 12) hinein, und aus Behältermodulen (5) heraus in Wärmesenken übertragen werden können, wobei sowohl externe Wärmesenken und Wärmequellen als auch interne Wärmetauscher (10, 11) welche jeweils Wärmesenke oder Wärmequelle einer Kreisprozessanlage (27) sind, genutzt werden können, abhängig von der Paarung der Wärmetauscher (10, 11, 12) in den einzelnen Behältermodulgehäusen (6), kann die Funktion einer seriellen Kreisprozesskaskadenschaltung, einer Parallelschaltung von mindesten zwei unterschiedlichen Kreisprozessanlagen (27), und die Kombination aus serieller und paralleler Zusammenschaltung unterschiedlicher Kreisprozessanlagen (27) erreicht werden kann.

5. Speicherbehälter (1) nach Anspruch 4, **dadurch gekennzeichnet, dass** innerhalb des Speicherbehälters (1) angeordnete, und über Wärmetauscher (10, 11, 12) innerhalb und außerhalb einzelner Behältermodule (5) thermisch gekoppelte Kreisprozessanlagen (27), mittels einer Steuerungseinrichtung (21) über Schaltventile (20) wahlweise in paralleler, serieller oder einer Kombination dieser Betriebsarten betrieben werden können.

6. Speicherbehälter (1) nach Anspruch 4 und Anspruch 5, **dadurch gekennzeichnet, dass** an einem Speichergehäusebauteil, vorzugsweise dem Speichergehäusedeckel (3) des Speicherbehälters (1) eine Modulverbindungseinrichtung zum Festlegen eines Behältermoduls (5) angeordnet ist.

7. Speicherbehälter (1) nach einem der Ansprüche 4 bis 6, **dadurch gekennzeichnet, dass** in dem Gehäusedeckel (3) des Speicherbehälters (1) mehrere Anschlussleitungsstutzen angeordnet sind, mittels derer aus den Behältermodulen (5) herausgeführte Anschlussleitungen mit einer externen Wärmequelle oder mit einer externen Wärmesenke verbindbar sind.

8. Speicherbehälter (1) nach einem der Ansprüche 4 bis 7, **dadurch gekennzeichnet, dass** jeder Innenraum der Behältermodule (5) mit einem ersten Wärmespeichermedium (7) und der Innenraum des Speicherbehälters mit einem zweiten Wärmespeichermedium (4) befüllt ist.

9. Speicherbehälter (1) nach einem der Ansprüche 4 bis 8, wobei ein Kreislauf eines Wärmeträgermediums (7) zwischen zugeordneten Wärmetauschern (10, 11, 12) durch eine, im Kreislauf hydraulisch eingebundene, Strömungserzeugungseinrichtung (13) erzeugt wird.

10. Speicherbehälter (1) nach einem der Ansprüche 4 bis 9, wobei der Kreislauf des Wärmeträgermediums (7) die zugeordneten Wärmetauscher (10, 11, 12) und das innerhalb des Behältermoduls (5) befindliche Wärmeträgermedium (7) umfasst, wobei durch mindestens ein offenes Ende (19) des hydraulischen Kreislaufs das Wärmeträgermedium (7) innerhalb des Behältermoduls (5) mit in den Kreislauf einbezogen und umgewälzt wird.

11. Speicherbehälter (1) nach einem der Ansprüche 4 bis 10, wobei der Kreislauf des Wärmeträgermediums (7) in einem geschlossenen hydraulischen Kreislauf zwischen den Wärmetauschern (10, 11, 12) erfolgt.

12. Speicherbehälter (1) nach einem der Ansprüche 4 bis 11, **dadurch gekennzeichnet, dass** die innerhalb des Speicherbehältergehäuses (3) angeordneten Behältermodule (5) ein Behältermodulgehäuse (6), einen Gehäuseboden und eine Gehäusewand aufweisen, wobei an dem Gehäuseboden und an einem dem Gehäuseboden gegenüberliegenden Rand der Gehäusewand eine radial angeordnete Verbindungsreinrichtung (26, 25) ausgebildet ist.

13. Speicherbehälter (1) nach einem der Ansprüche 4 bis 12, **dadurch gekennzeichnet, dass** innerhalb des Speicherbehälters (1) mindestens ein Behältermodulgehäuse (6) mit einem Wärmeträgermedium (7) angeordnet ist.

14. Speicherbehälter nach einem der Ansprüche 4 bis 13, **dadurch gekennzeichnet, dass** zwei oder mehrere Behältermodule (5) in einer Montageeinheit vorzugsweise an einem Speicherbehälterdeckel (3) festgelegt werden können.

## Claims

1. Container module (5) for a storage container (1) with at least one circular process system (27) for using thermal energy, wherein the container module (5) comprises a container module housing (6) with a closable mounting opening (28), wherein the mounting opening (28) is provided for the mounting of heat exchangers (10, 11, 12) and has dimensions which allow a heat exchangers (10, 11, 12) to be introduced into the container module housing (6) and be fixed and connected in the container module housing (6), and wherein at least one heat exchanger (10, 11, 12) is arranged in the container module housing (6), wherein the at least one heat exchanger (10, 11, 12), with at least a first pair of connecting lines, opens into openings of the housing wall of the container module housing (6) and is connectable in a fluid-guiding manner by means of a connector (29),
**characterized in that** the container module housing (6) comprises two connection means (25, 26), wherein a container module housing (6) can be fixed to another container module housing (6) at the connection means (26) thereof, using one of the connections means (25), in such a way that the mounting opening (28) of the container module housing (6) is closed by the base of the further container module housing (6).

2. Container module (5) for a storage container (1) with at least one circular process system (27) for using thermal energy according to claim 1, **characterized in that** at least two heat exchangers (10, 11, 12) are arranged on or in the container module housing (6), wherein the at least two heat exchangers (10, 11, 12), with the at least one first pair of connecting lines, open into openings of the housing wall of the container module housing (6) and are connectable in a fluid-guiding manner by means of the connector (29).

3. Container module (5) of a storage container (1) with at least one circular process system (27) for using thermal energy, according to any one of the preceding claims, wherein the container module housing (6) comprises a device for connection with a holder which can accommodate two or more container modules (5) inside a storage container (1).

4. Storage container (1) with at least one circular process system (27) for using thermal energy, wherein the storage container (1) comprises a storage container housing (2) with a housing opening and a housing lid (3) which can be releasably connected to the storage container housing (2) and which closes the housing opening,
**characterized in that** at least two container modules (5) according to any one of the preceding claims are located in the storage container housing (2), and **in that** individual heat exchangers (10, 11) from two different container modules (5) are connected with circular process system components using fluid lines in such a way that at least one circular process system (27) can be operated, wherein in at least one circular process system (27) a closed circular process can be operated with a working medium which can be used isolated from the heat carrier medium (7) in the interior spaces of the container modules (5) and isolated from the heat carrier medium (4) in the interior space of the storage container (1) surrounding the container modules (5), wherein heat flows can be transferred from heat sources into individual container modules (5), via further heat exchangers (10, 11, 12) arranged there, and from container modules (5) into heat sinks, wherein both, external heat sinks and heat sources, and internal heat exchangers (10, 11) that are respectively heat sink and heat source of a circular process system (27) can be used, dependent upon the pairing of the heat exchangers (10, 11, 12) in the individual container module housings (6), the function of a serial circular process cascade circuit, a parallel circuit of at least two different circular process systems (27), and the combination of serial and parallel interconnections of different circular process systems (27) can be achieved.

5. Storage container (1) according to claim 4, **characterized in that** circular process systems (27) arranged inside the storage container (1) and thermally coupled inside and outside of individual container modules (5) via heat exchangers (10, 11, 12) can be operated, using a controller (21), via switching valves (20) selectively in a parallel, serial or in a combination of these operating modes.

6. Storage container (1) according to claim 4 and claim 5,
**characterized in that** a module connection means for securing a container module (5) is arranged on a storage housing component, preferably the storage housing lid (3) of the storage container (1).

7. Storage container (1) according to any one of claims 4 to 6, **characterized in that** multiple connecting line ports are arranged in the housing lid (3) of the storage container (1), by means of which ports connecting lines, leading out of the container modules (5), are connectable with an external heat source or with an external heat sink.

8. Storage container (1) according to any one of claims 4 to 7, **characterized in that** each interior space of the container modules (5) is filled with a first heat storage medium (7), and the interior space of the storage container is filled with a second heat storage medium (4) .

9. Storage container (1) according to any one of claims 4 to 8, wherein a circuit of a heat carrier medium (7) between associated heat exchangers (10, 11, 12) is generated by a flow generation means (13) connected hydraulically in the circuit.

10. Storage container (1) according to any one of claims 4 to 9, wherein the circuit of the heat exchanger medium (7) includes the associated heat exchangers (10, 11, 12) and the heat carrier medium (7) located inside the container module (5), wherein the heat carrier medium (7) inside the container module (5) is involved and recirculated in the circuit through at least one open end (19) of the hydraulic circuit.

11. Storage container (1) according to any one of claims 4 to 10, wherein the circuit of the heat exchanger (7) occurs in a closed hydraulic circuit between the heat exchangers (10, 11, 12).

12. Storage container (1) according to any one of claims 4 to 11, **characterized in that** the container modules (5) arranged inside the storage container housing (3) comprise a container module housing (6), a housing base and a housing wall, wherein a radially arranged connection means (26, 26) is formed at an edge of the housing wall opposite the housing base.

13. Storage container (1) according to any one of claims 4 to 12, **characterized in that** at least one container module housing (6) with a heat carrier medium (7) is arranged inside the storage container (1).

14. Storage container according to any one of claims 4 to 13,
**characterized in that** two or multiple container modules (5) in a mounting unit can be secured, preferably on a storage container lid (3).

## Revendications

1. Module contenant (5) pour un contenant de stockage (1) comprenant au moins un système en cycle fermé (27) pour l'utilisation d'énergie thermique, dans lequel le module contenant (5) présente un boîtier de module contenant (6) avec une ouverture de montage (28) pouvant être fermée, dans lequel l'ouverture de montage (28) est prévue pour le montage d'échangeurs de chaleur (10, 11, 12) et présente des dimensions qui permettent une introduction d'un échangeur de chaleur (10, 11, 12) dans le boîtier de module contenant (6) et sa fixation et son raccordement dans le boîtier de module contenant (6), et dans lequel au moins un échangeur de chaleur (10 ,11 ,12) est disposé dans le boîtier de module contenant (6), dans lequel l'au moins un échangeur de chaleur (10, 11, 12), avec au moins une première paire de conduites de raccordement, débouche dans des ouvertures de la paroi du boîtier de module contenant (6) et peut être relié de manière à guidant du fluide par un connecteur de raccordement (29), **caractérisé en ce que** le boîtier de module contenant (6) présente deux dispositifs de raccordement (25, 26), dans lequel un boîtier de module contenant (6) peut être fixé avec un des dispositifs de raccordement (25) à un autre boîtier de module contenant (6) à son dispositif de raccordement (26) de telle manière que l'ouverture de montage (28) du boîtier de module contenant (6) est fermé par le fond de l'autre boîtier de module contenant (6).

2. Module contenant (5) pour un contenant de stockage (1) avec au moins un système en cycle fermé (27) pour l'utilisation d'énergie thermique selon la revendication 1, **caractérisé en ce que** à ou dans le boîtier de module contenant (6) sont disposés au moins deux échangeurs de chaleur (10, 11, 12), dans lequel les au moins deux échangeurs de chaleur (10, 11, 12) débouchent avec l'au moins une première paire de conduites de raccordement dans des ouvertures de la paroi du boîtier de module contenant (6) et peuvent être reliés, au moyen du connecteur de raccordement (29), de manière à guider du fluide.

3. Module contenant (5) pour un contenant de stockage (1) avec au moins un système en cycle fermé (27) pour l'utilisation d'énergie thermique, selon l'une quelconque des revendications précédentes, dans lequel le boitier de module contenant (6) présente un dispositif pour le raccordement avec un dispositif de support, qui peut loger deux ou plusieurs modules contenant (5) au sein d'un contenant de stockage (1).

4. Contenant de stockage (1) avec au moins un système en cycle fermé (27) pour l'utilisation d'énergie thermique, dans lequel le contenant de stockage (1) présente un boîtier de contenant de stockage (2) avec une ouverture de boîtier et un couvercle de boîtier (3), qui peut être raccordé amoviblement au boîtier de contenant de stockage (2) et de manière à fermer l'ouverture de boîtier, **caractérisé en ce que** dans le boîtier de contenant de stockage (2), au moins deux modules contenant (5) sont selon l'une des revendications précédentes et **en ce que** des échangeurs de chaleur (10, 11) individuels de deux modules contenant différents sont raccordés, à l'aide des conduits de fluide, avec des composants du système à cycle fermé de telle sorte que au moins un système à cycle fermé (27) peut être exploité, dans lequel un cycle fermé peut être exploité dans au moins un système à cycle fermé (27) avec un agent, ledit agent peut être utilisé, de manière isolé du fluide caloporteur (7), dans les espaces intérieure des modules contenant (5) et isolé du fluide caloporteur (4) dans l'espace intérieure du contenant de stockage (1) entourant les modules contenant (5), dans lequel des flux de chaleur peuvent être transférés, à partir des sources de chaleur, dans des modules contenant (5) individuels au moyen d'autres échangeurs de chaleur (10,11,12) y agencés, vers et sortant des modules contenant (5), dans des puits de chaleur, dans lequel des puits de chaleur et des sources de chaleur externes ainsi que des échangeurs de chaleur internes (10, 11) qui sont chacun un puit de chaleur ou une source de chaleur d'un système à cycle fermé (27) peuvent être utilisés, en fonction d'accouplement d'échangeurs de chaleur (10,11,12) dans des boîtiers de module contenant (6) individuels, la fonction d'un circuit série de processus cascade, d'un montage en parallèle de au moins deux systèmes en cycle fermé (27) différents, et la combinaison d'une interconnexion en série ou parallèle de différents systèmes en cycle fermé (27) peut être obtenue.

5. Contenant de stockage (1) selon la revendication 4, **caractérisé en ce que** des systèmes en cycle fermé (27) disposés au sein du contenant de stockage (1) et couplés thermiquement au moyen d'échangeurs de chaleur (10, 11, 12) au sein et à l'extérieur des modules de contenant (5) individuels, peuvent être exploités au moyen d'un dispositif de commande (21) par le biais de vannes de commutation (20) sélectivement en parallèle, en série ou en combinaison de ces modes de fonctionnement.

6. Contenant de stockage (1) selon la revendication 4 et la revendication 5, **caractérisé en ce qu'**un moyen connecteur de module est agencé à un composant de boitier de stockage, de préférence au couvercle du boitier de stockage (3) du contenant de stockage (1) pour la fixation d'un module contenant (5).

7. Contenant de stockage (1) selon l'une quelconque des revendications 4 à 6, **caractérisé en ce que**, dans le couvercle du boîtier (3) du contenant de stockage (1) sont disposés plusieurs ports de conduites de raccordement, au moyen desdits ports des conduites de raccordement faisant sortie des modules contenant (5) peuvent être connectés avec une source de chaleur externe ou un puit de chaleur externe.

8. Contenant de stockage (1) selon l'une quelconque des revendications 4 à 7, **caractérisé en ce que** chaque espace intérieur des modules contenant (5) est rempli avec un premier fluide caloporteur (7) et l'espace intérieur du contenant de stockage avec un deuxième fluide caloporteur (4) .

9. Contenant de stockage (1) selon l'une quelconque des revendications 4 à 8, dans lequel un cycle d'un fluide caloporteur (7) est produit entre des échangeurs de chaleur (10, 11, 12) associés, au moyen d'un dispositif générateur de flux (13) intégré de manière hydraulique dans le cycle.

10. Contenant de stockage (1) selon l'une quelconque des revendications 4 à 9, dans lequel le cycle du fluide caloporteur (7) comprend les échangeurs de chaleur (10, 11, 12) associés et le fluide caloporteur (7) situé à l'intérieur du module contenant (5), dans lequel à travers au moins une extrémité ouverte (19) du cycle hydraulique, le fluide caloporteur (7) au sein du contenant de stockage (5) est inclus et recirculé dans le cycle.

11. Contenant de stockage (1) selon l'une quelconque des revendications 4 à 10, dans lequel le cycle du fluide caloporteur (7) s'effectue dans un cycle hydraulique fermé entre les échangeurs de chaleur (10, 11, 12).

12. Contenant de stockage (1) selon l'une quelconque des revendications 4 à 11, **caractérisé en ce que** des modules contenant (5) disposés à l'intérieur du boîtier de contenant de stockage (3) présentent un boîtier de module contenant (6), un fond de boîtier et une paroi de boîtier, dans lequel un dispositif de raccordement (26, 25) agencé de manière radiale, est formé au fond du boîtier et à un bord situé à l'opposé du fond de boîtier de la paroi de boitier.

13. Contenant de stockage (1) selon l'une quelconque des revendications 4 à 12, **caractérisé en ce que**, au moins un boîtier de module contenant (6) avec un fluide caloporteur (7) est disposé à l'intérieur du contenant de stockage (1) .

14. Contenant de stockage selon l'une quelconque des revendications 4 à 13, **caractérisé en ce que** deux ou plusieurs modules contenant (5) dans une unité de montage peuvent être fixés de préférence à un couvercle de contenant de stockage (3).
